# EUROPEAN PATENT APPLICATION

(11) **EP 4 811 896 A1**
(43) Date of publication of application: **23.09.2026**
(21) Application number: 23958652.2
(22) Date of filing: 17.11.2023
(51) Int. Cl.: H04W 72/04, H04B 7/02, H04L 9/00

(54) **RESOURCE CONFIGURATION METHOD, DEVICE, AND STORAGE MEDIUM**

(71) Applicant: Beijing Xiaomi Mobile Software Co., Ltd., Beijing 100085 (CN)
(72) Inventor: LIU, Zhengxuan, Beijing 100085 (CN); LI, Mingju, Beijing 100085 (CN)
(74) Representative: Stöckeler, Ferdinand
(86) International application number: PCT/CN2023/132447
(87) International publication number: WO 2025/102379

(57) **Abstract**

The present disclosure relates to a resource configuration method, a device, and a storage medium. The method comprises: receiving first information sent from a network device, wherein the first information comprises first indication information, the first indication information is used for indicating the position of a first signal resource, the first signal resource is at least one signal resource among a plurality of signal resources and different signal resources are used for measuring channels corresponding to different antenna ports and determining the position of a second signal resource on the basis of the position of the first signal resource, wherein the second signal resource is a signal resource other than the first signal resource among the plurality of signal resources, and the position of the second signal resource is a position the same as and/or adjacent to the position of the first signal resource. That is to say, a terminal device can determine the position of the second signal resource on the basis of the position of the first signal resource indicated by the network device. In this way, the network device only needs to specify the position of the first signal resource, thereby reducing signaling indication overhead.

## Description

### TECHNICAL FIELD

The disclosure relates to the field of communication technologies, and particularly to a method for resource configuration, a device, and a storage medium.

### BACKGROUND

In a wireless communication system, to further improve system efficiency or enhance coverage, a count of antenna ports may be increased to expand an antenna scale. Correspondingly, there also needs to extend or enhance channel status information-reference signal (CSI-RS) or channel status information (CSI) reporting to support deployment of a larger antenna scale.

### SUMMARY

Embodiments of the disclosure provide a method for resource configuration, a device, and a storage medium.

According to a first aspect of embodiments of the disclosure, a method for resource configuration is provided. The method includes:
receiving first information sent from a network device, in which the first information includes first indication information, the first indication information indicates a position of a first signal resource, the first signal resource is at least one signal resource in multiple signal resources, and different signal resources are used to measure channels corresponding to different antenna ports; and
determining a position of a second signal resource based on the position of the first signal resource, in which the second signal resource is a signal resource(s) in the multiple signal resources other than the first signal resource, and the position of the second signal resource includes a position same as and/or adjacent to the position of the first signal resource.

According to a second aspect of embodiments of the disclosure, a method for resource configuration is provided. The method includes:
sending first information to a terminal, in which the first information includes first indication information, the first indication information indicates a position of a first signal resource, the first signal resource is at least one signal resource in multiple signal resources, and different signal resources are used to measure channels corresponding to different antenna ports; the first indication information is used for the terminal to determine a position of a second signal resource based on the position of the first signal resource, in which the second signal resource is a signal resource in the multiple signal resources other than the first signal resource, and the position of the second signal resource includes a position same as and/or adjacent to the position of the first signal resource.

According to a third aspect of embodiments of the disclosure, a terminal is provided. The terminal includes:
a transceiver module, configured to receive first information sent from a network device, in which the first information includes first indication information, the first indication information indicates a position of a first signal resource, the first signal resource is at least one signal resource in multiple signal resources, and different signal resources are used to measure channels corresponding to different antenna ports; and
a processing module, configured to determine a position of a second signal resource based on the position of the first signal resource, in which the second signal resource is a signal resource(s) in the multiple signal resources other than the first signal resource, and the position of the second signal resource includes a position same as and/or adjacent to the position of the first signal resource.

According to a fourth aspect of embodiments of the disclosure, a network device is provided. The network device includes:
a transceiver module, configured to send first information to a terminal, in which the first information includes first indication information, the first indication information indicates a position of a first signal resource, the first signal resource is at least one signal resource in multiple signal resources, and different signal resources are used to measure channels corresponding to different antenna ports; the first indication information is used for the terminal to determine a position of a second signal resource based on the position of the first signal resource, in which the second signal resource is a signal resource(s) in the multiple signal resources other than the first signal resource, and the position of the second signal resource includes a position same as and/or adjacent to the position of the first signal resource.

According to a fifth aspect of embodiments of the disclosure, a communication device is provided. The communication device includes:
one or more processors; in which the communication device is configured to execute the method according to any alternative implementation of the first aspect or the second aspect.

According to a sixth aspect of embodiments of the disclosure, a storage medium is provided. The storage medium stores instructions. When the instructions are run on a communication device, the communication device is caused to execute the method according to any alternative implementation of the first aspect or the second aspect.

With the technical solution according to the embodiments of the disclosure, the following beneficial effects may be produced. The first information sent from the network device is received, in which the first information includes the first indication information, the first indication information indicates the position of the first signal resource, the first signal resource is the at least one signal resource in the multiple signal resources, and different signal resources are used to measure channels corresponding to different antenna ports; and the position of the second signal resource is determined based on the position of the first signal resource, in which the second signal resource is the signal resource(s) in the multiple signal resources other than the first signal resource, and the position of the second signal resource includes the position same as and/or adjacent to the position of the first signal resource. That is, the terminal may determine the position of the second signal resource based on the position of the first signal resource indicated by the network device. In this way, the network device only needs to designate the position of the first signal resource, such that signaling indication overhead may be reduced. Further, the position of the second signal resource includes a position same as and/or adjacent to the position of the first signal resource. In this way, time-frequency domain correlation in multiple channels corresponding to the multiple signal resources may be ensured, such that accuracy of channel measurement may be improved.

It should be understood that the above general description and the following detailed description are only exemplary and explanatory, and do not limit embodiments of the disclosure.

### BRIEF DESCRIPTION OF THE DRAWINGS

In order to more clearly illustrate technical solutions in embodiments of the disclosure, the accompanying drawings required for describing embodiments are introduced below. The following accompanying drawings are merely some embodiments of the disclosure and do not specifically limit the scope of protection of the disclosure.
FIG. 1A is a schematic diagram illustrating an architecture of a communication system according to an embodiment of the disclosure.
FIG. 1B is a schematic diagram illustrating a code domain multiplexing (CDM) group according to an embodiment of the disclosure.
FIG. 2A is a flow chart illustrating an interaction of a method for resource configuration according to an embodiment of the disclosure.
FIG. 2B is a schematic diagram illustrating a first signal resource according to an embodiment of the disclosure.
FIG. 2C is a schematic diagram illustrating a position of a signal resource according to an embodiment of the disclosure.
FIG. 2D is a schematic diagram illustrating a position of a signal resource according to an embodiment of the disclosure.
FIG. 2E is a schematic diagram illustrating a position of a signal resource according to an embodiment of the disclosure.
FIG. 2F is a schematic diagram illustrating a position of a signal resource according to an embodiment of the disclosure.
FIG. 2G is a flow chart illustrating an interaction of a method for resource configuration according to an embodiment of the disclosure.
FIG. 2H is a flow chart illustrating an interaction of a method for resource configuration according to an embodiment of the disclosure.
FIG. 2I is a schematic diagram illustrating a position of a signal resource according to an embodiment of the disclosure.
FIG. 2J is a schematic diagram illustrating a position of a signal resource according to an embodiment of the disclosure.
FIG. 3A is a flow chart illustrating a method for resource configuration according to an embodiment of the disclosure.
FIG. 3B is a flow chart illustrating a method for resource configuration according to an embodiment of the disclosure.
FIG. 3C is a flowchart illustrating a method for resource configuration according to an embodiment of the disclosure.
FIG. 3D is a flow chart illustrating a method for resource configuration according to an embodiment of the disclosure.
FIG. 3E is a flow chart illustrating a method for resource configuration according to an embodiment of the disclosure.
FIG. 4A is a flow chart illustrating a method for resource configuration according to an embodiment of the disclosure.
FIG. 4B is a flow chart illustrating a method for resource configuration according to an embodiment of the disclosure.
FIG. 4C is a flow chart illustrating a method for resource configuration according to an embodiment of the disclosure.
FIG. 4D is a flow chart illustrating a method for resource configuration according to an embodiment of the disclosure.
FIG. 5 is a flow chart illustrating an interaction of a method for resource configuration according to an embodiment of the disclosure.
FIG. 6A is a block diagram illustrating a terminal according to an embodiment of the disclosure.
FIG. 6B is a block diagram illustrating a network device according to an embodiment of the disclosure.
FIG. 7A is a block diagram illustrating a communication device according to an embodiment of the disclosure.
FIG. 7B is a block diagram illustrating a chip according to an embodiment of the disclosure.

### DETAILED DESCRIPTION

Embodiments of the disclosure provide a method for resource configuration, a device, and a storage medium.

In a first aspect, embodiments of the disclosure provide a method for resource configuration. The method includes:
receiving first information sent from a network device, in which the first information includes first indication information, the first indication information indicates a position of a first signal resource, the first signal resource is at least one signal resource in multiple signal resources, and different signal resources are used to measure channels corresponding to different antenna ports; and
determining a position of a second signal resource based on the position of the first signal resource, in which the second signal resource is a signal resource(s) in the multiple signal resources other than the first signal resource, and the position of the second signal resource includes a position same as and/or adjacent to the position of the first signal resource.

In the above embodiments, the network device only needs to indicate the position of the first signal resource, which reduces signaling indication overhead. Further, the position of the second signal resource includes a position same as and/or adjacent to the position of the first signal resource. In this way, time-frequency domain correlation in multiple channels corresponding to the multiple signal resources may be ensured, and accuracy of channel measurement may be improved.

In combination with some embodiments of the first aspect, in some embodiments, determining the position of the second signal resource based on the position of the first signal resource includes:
determining the position of the second signal resource in a designated manner based on the position of the first signal resource,
in which the designated manner includes at least one of: a time domain multiplexing (TDM) manner, a frequency domain multiplexing (FDM) manner, or a code domain multiplexing (CDM) manner.

In the above embodiments, the position of the second signal resource may be determined in multiple manners, and the manner for determining the position of the second signal resource is more flexible.

In combination with some embodiments of the first aspect, in some embodiments, the position includes a time domain position and a frequency domain position, and the designated manner includes the TDM manner or the FDM manner; and determining the position of the second signal resource in the designated manner based on the position of the first signal resource includes:
determining a first position and a second position of the second signal resource based on the position of the first signal resource and an adjacent relationship of the multiple signal resources, in which the first position is the time domain position or the frequency domain position, and the second position is the time domain position or the frequency domain position different from the first position.

In the above embodiments, the time-frequency domain position of the second signal resource may be determined based on the adjacent relationship of the multiple signal resources and the position of the first signal resource. In this way, the time-frequency domain correlation in the multiple channels corresponding to the multiple signal resources may be ensured, and the accuracy of the channel measurement may be improved.

In combination with some embodiments of the first aspect, in some embodiments, determining the first position and the second position of the second signal resource based on the position of the first signal resource and the adjacent relationship of the multiple signal resources includes:
determining a first position of the first signal resource as the first position of the second signal resource;
determining an adjacent position to a second position of the first signal resource; and
determining the second position of the second signal resource based on the adjacent position and the adjacent relationship of the multiple signal resources.

In the above embodiments, the first position of the second signal resource may be determined first, and then the second position of the second signal resource is determined based on the adjacent relationship of the multiple signal resources. In this way, the time-frequency domain position of the second signal resource may be set flexibly.

In combination with some embodiments of the first aspect, in some embodiments, the second signal resource includes multiple CDM groups, and the first information also includes second indication information, the second indication information indicates a position of a first CDM group, the first CDM group is a CDM group(s) in the multiple CDM groups other than a second CDM group, and the second CDM group is any CDM group in the multiple CDM groups of the second signal resource; and determining the first position and the second position of the second signal resource based on the position of the first signal resource and the adjacent relationship of the multiple signal resources includes:
determining a first position of the first signal resource as a first position of the second CDM group of the second signal resource;
determining an adjacent position to a second position of the first signal resource;
determining a second position of the second CDM group based on the adjacent position and the adjacent relationship of the multiple signal resources; and
determining a first position and a second position of the first CDM group based on the second indication information.

In the above embodiments, in a case that the second signal resource includes multiple CDM groups, a first position and a second position of any CDM group may be determined first, and then positions of other CDM groups are determined based on the second indication information sent from the network device. In this way, the position of each CDM of the second signal resource may be determined flexibly.

In combination with some embodiments of the first aspect, in some embodiments, the second indication information includes a positional relationship of multiple CDM groups of the first signal resource; and determining the first position and the second position of the first CDM group based on the second indication information includes:
determining a positional relationship of multiple CDM groups in the first CDM group based on the positional relationship of the multiple CDM groups of the first signal resource; and
determining a first position and a second position of each CDM group in the first CDM group based on the positional relationship of the multiple CDM groups in the first CDM group.

In the above embodiments, the terminal may determine the positional relationship of the multiple CDM groups in the first CDM group based on the positional relationship of the multiple CDM groups of the first signal resource, thus determining the position of each CDM group in the first CDM group. In this way, the network device only needs to designate the positional relationship of the multiple CDM groups of the first signal resource, thus the signaling indication overhead may be further reduced.

In combination with some embodiments of the first aspect, in some embodiments, the first signal resource includes multiple CDM groups, and determining the first position and the second position of the second signal resource based on the position of the first signal resource and the adjacent relationship of the multiple signal resources includes:
determining a first position of a third CDM group of the first signal resource as the first position of the second signal resource, in which the third CDM group is any CDM group in the multiple CDM groups of the first signal resource;
determining an adjacent position to a second position of the third CDM group of the first signal resource; and
determining the second position of the second signal resource based on the adjacent position and the adjacent relationship of the multiple signal resources.

In the above embodiments, in a case that the first signal resource includes multiples CDM groups, the position of the second signal resource may be determined based on the position of any CDM group, and the position of the second signal resource is more flexible.

In combination with some embodiments of the first aspect, in some embodiments, the first information further includes third indication information, and the third indication information indicates the adjacent relationship of the multiple signal resources.

In the above embodiments, the terminal may receive the adjacent relationship of the multiple signal resources indicated by the network device, and then the manner for obtaining the adjacent relationship is more flexible.

In combination with some embodiments of the first aspect, in some embodiments, the designated manner includes the CDM manner, and determining the position of the second signal resource in the designated manner based on the position of the first signal resource includes:
determining that the first signal resource and the second signal resource belong to the same resource set;
for each second signal resource, determining a third signal resource corresponding to the second signal resource from the first signal resource based on a designated association relationship, and determining a position of the third signal resource as the position of the second signal resource, in which the designated association relationship includes a correspondence between different second signal resources and different first signal resources.

In the above embodiments, in a case that the first signal resource and the second signal resource belong to the same resource set, the position of the first signal resource may be determined as the position of the second signal resource, and then the time-frequency domain resource may be saved.

In combination with some embodiments of the first aspect, in some embodiments, determining that the first signal resource and the second signal resource belong to the same resource set includes:
determining that resource information of the first signal resource is the same as resource information of the second signal resource, in which the resource information includes at least one of: a count of ports, a density, a start position of a resource block, a count of resource blocks, or a CDM group type, and the same port index in different instances of resource information corresponds to the same subcarrier position or the same orthogonal frequency division multiplexing (OFDM) symbol position.

In the above embodiments, it may be determined whether the first signal resource and the second signal resource belong to the same resource set via at least one instance of the resource information, and then the manner for determining the same resource set is more flexible.

In combination with some embodiments of the first aspect, in some embodiments, the first information also includes fourth indication information, and the fourth indication information indicates the designated association relationship.

In the above embodiments, the terminal may receive the designated association relationship indicated by the network device, and then the manner for obtaining the designated association relationship is more flexible.

In combination with some embodiments of the first aspect, in some embodiments, determining the position of the second signal resource in the designated manner based on the position of the first signal resource includes:
determining a position of a fourth signal resource in a first manner based on the position of the first signal resource, in which the fourth signal resource is some of signal resources in the second signal resource, and the first manner is any manner in the designated manner; and
determining a position of a fifth signal resource in a second manner based on the position of the first signal resource and the position of the fourth signal resource, in which the fifth signal resource is a signal resource(s) in the second signal resource other than the fourth signal resource, and the second manner includes at least one manner in the designated manner other than the first manner.

In the above embodiments, the position of the second signal resource may be determined by combining two or three manners in the designated manner, and then the manner for determining the position is more flexible.

In combination with some embodiments of the first aspect, in some embodiments, the signal resource is a channel status information-reference signal (CSI-RS) resource.

In the above embodiments, the signal resource may be a CSI-RS resource, such that signaling overhead may be saved.

In combination with some embodiments of the first aspect, in some embodiments, the multiple signal resources belong to one or more resource sets, different resource sets have different instances of resource information, and the resource information includes at least one of: a count of ports, a density, a start position of a resource block, a count of resource blocks, or a CDM group type, and the same port index in different instances of resource information corresponds to the same subcarrier position or the same OFDM symbol position.

In the above embodiments, the multiple signal resources may belong to the same resource set or different resource sets, such that the scope of the signal resources is wider.

In combination with some embodiments of the first aspect, in some embodiments, the first signal resource is within one or more adjacent slots, or within one or more adjacent physical resource blocks (PRBs).

In the above embodiments, multiple adjacent first signal resources may be set within the slots or PRBs, the time-frequency domain correlation in the multiple channels corresponding to the multiple first signal resources may be ensured, and the accuracy of the channel measurement may be improved.

In a second aspect, embodiments of the disclosure provide a method for resource configuration. The method includes:
sending first information to a terminal, in which the first information includes first indication information, the first indication information indicates a position of a first signal resource, the first signal resource is at least one signal resource in multiple signal resources, and different signal resources are used to measure channels corresponding to different antenna ports; the first indication information is used for the terminal to determine a position of a second signal resource based on the position of the first signal resource, in which the second signal resource is a signal resource(s) in the multiple signal resources other than the first signal resource, and the position of the second signal resource includes a position same as and/or adjacent to the position of the first signal resource.

In combination with some embodiments of the second aspect, in some embodiments, the second signal resource includes multiple CDM groups, and the first information also includes second indication information, the second indication information indicates a position of a first CDM group, the first CDM group is a CDM group(s) in the multiple CDM groups other than a second CDM group, and the second CDM group is any CDM group in the multiple CDM groups of the second signal resource; the second indication information is used for the terminal to determine a first position and a second position of the first CDM group, the first position is a time domain position or a frequency domain position, and the second position is the time domain position or the frequency domain position different from the first position.

In combination with some embodiments of the second aspect, in some embodiments, the second indication information includes a positional relationship of multiple CDM groups of the first signal resource; the second indication information is configured for the terminal to determine a positional relationship of multiple CDM groups in the first CDM group based on the positional relationship of the multiple CDM groups of the first signal resource; and determine a first position and a second position of each CDM group in the first CDM group based on the positional relationship of the multiple CDM groups in the first CDM group.

In combination with some embodiments of the second aspect, in some embodiments, the position includes a time domain position and a frequency domain position, the first information also includes third indication information, and the third indication information indicates the adjacent relationship of the multiple signal resources;
the third indication information is used for the terminal to determine a first position and a second position of the second signal resource based on the position of the first signal resource and an adjacent relationship of the multiple signal resources, in which the first position is the time domain position or the frequency domain position, and the second position is the time domain position or the frequency domain position different from the first position.

In combination with some embodiments of the second aspect, in some embodiments, the first information also includes fourth indication information, and the fourth indication information indicates a designated association relationship; the designated association relationship includes a correspondence between different second signal resources and first signal resources;
the fourth indication information is used for the terminal to determine that the first signal resource and the second signal resource belong to the same resource set; and for each second signal resource, determine a third signal resource corresponding to the second signal resource from the first signal resource based on a designated association relationship, and determine a position of the third signal resource as the position of the second signal resource.

In combination with some embodiments of the second aspect, in some embodiments, the signal resource is a CSI-RS resource.

In combination with some embodiments of the second aspect, in some embodiments, the multiple signal resources belong to one or more resource sets, different resource sets have different instances of resource information, and the resource information includes at least one of: a count of ports, a density, a start position of a resource block, a count of resource blocks, or a CDM group type, and the same port index in different instances of resource information corresponds to the same subcarrier position or the same OFDM symbol position.

In combination with some embodiments of the second aspect, in some embodiments, the first signal resource is within one or more adjacent slots, or within one or more adjacent PRBs.

In a third aspect, embodiments of the disclosure provide a method for resource configuration. The method includes:
sending, by a network device, first information to a terminal, in which the first information includes first indication information, the first indication information indicates a position of a first signal resource, the first signal resource is at least one signal resource in multiple signal resources, and different signal resources are used to measure channels corresponding to different antenna ports; and
determining, by the terminal, a position of a second signal resource based on the position of the first signal resource, in which the second signal resource is a signal resource(s) in the multiple signal resources other than the first signal resource, and the position of the second signal resource includes a position same as and/or adjacent to the position of the first signal resource.

In a fourth aspect, embodiments of the disclosure provide a terminal. The terminal may include at least one of a transceiver module or a processing module, in which the terminal may be configured to execute alternative implementations of the first aspect.

In a fifth aspect, embodiments of the disclosure provide a network device. The network device may include at least one of a transceiver module or a processing module, in which the network device may be configured to execute alternative implementations of the second aspect.

In a sixth aspect, embodiments of the disclosure provide a terminal. The terminal may include one or more processors, in which the terminal may be configured to execute alternative implementations of the first aspect.

In a seventh aspect, embodiments of the disclosure provide a network device. The network device may include one or more processors, in which the network device may be configured to execute alternative implementations of the second aspect.

In an eighth aspect, embodiments of the disclosure provide a communication system. The communication system may include: a terminal and a network device. The terminal is configured to execute the method described in alternative implementations of the first aspect, and the network device is configured to execute the method described in alternative implementations of the second aspect.

In a ninth aspect, embodiments of the disclosure provide a storage medium. The storage medium stores instructions. When the instructions are executed on a communication device, the communication device is caused to execute the method described in alternative implementations of the first aspect or the method described in alternative implementations of the second aspect.

In a tenth aspect, embodiments of the disclosure provide a program product. The program product, when executed by a communication device, causes the communication device to execute the method described in alternative implementations of the first aspect or the method described in alternative implementations of the second aspect.

In an eleventh aspect, embodiments of the disclosure provide a computer program. When the computer program is run on a computer, the computer is caused to execute the method described in alternative implementations of the first aspect or the method described in alternative implementations of the second aspect.

In a twelfth aspect, embodiments of the disclosure provide a chip or a chip system. The chip or chip system includes a processing circuit, configured to execute the method described in alternative implementations of the first aspect or the method described in alternative implementations of the second aspect.

It may be understood that all the terminal, the network device, the communication device, the communication system, the storage medium, the program product, the computer program and the chip or the chip system may be configured to execute the method in the embodiments of the disclosure. Thus, regarding beneficial effects they may achieve, please refer to the beneficial effects in the corresponding methods, which is not repeated herein.

Embodiments of the disclosure provide a method for resource configuration, a device, and a storage medium. In some embodiments, terms such as method for resource configuration, method for information processing, and communication method may be used interchangeably; terms such as apparatus for resource configuration, apparatus for information processing, communication apparatus, and communication device may be used interchangeably; and terms such as system for resource configuration, and communication system may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and each step may be arbitrarily combined. For example, a solution after removing some steps in a certain embodiment may also be implemented as an independent embodiment, and the order of the steps in a certain embodiment may be arbitrarily exchanged. In addition, alternative implementations in a certain embodiment may be arbitrarily combined. In addition, respective embodiments may be arbitrarily combined, for example, some or all steps of different embodiments may be arbitrarily combined, and a certain embodiment may be arbitrarily combined with alternative implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In some embodiments, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a count of descriptive objects is not limited by the ordinal number, and may be one or more. Taking the "first apparatus" as an example, a count of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as a device (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced with the terminal. For example, a structure in which communication between the access network device, the core network device, or the network device and the terminal is replaced with communication between multiple terminals (such as, device-to-device (D2D), vehicle-to-everything (V2X), etc.) may also be applied to various embodiments of the disclosure. In this case, the terminal may be set to have a structure that has all or some of functions of the access network device. In addition, the language such as "up" and "down" may also be replaced with a language (such as, "side") corresponding to the communication between the terminals. For example, the up channel, the down channel, etc. may be replaced with the side channel or direct channel, and the uplink, the downlink, etc. may be replaced with a sidelink or a direct link.

In some embodiments, the terminal may be replaced with the access network device, the core network device, or the network device. In this case, the access network device, the core network device, or the network device may also be configured to have a structure that has all or some of functions of the terminal.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and a combination of any elements, any rows, or any columns may also be implemented as an independent embodiment.

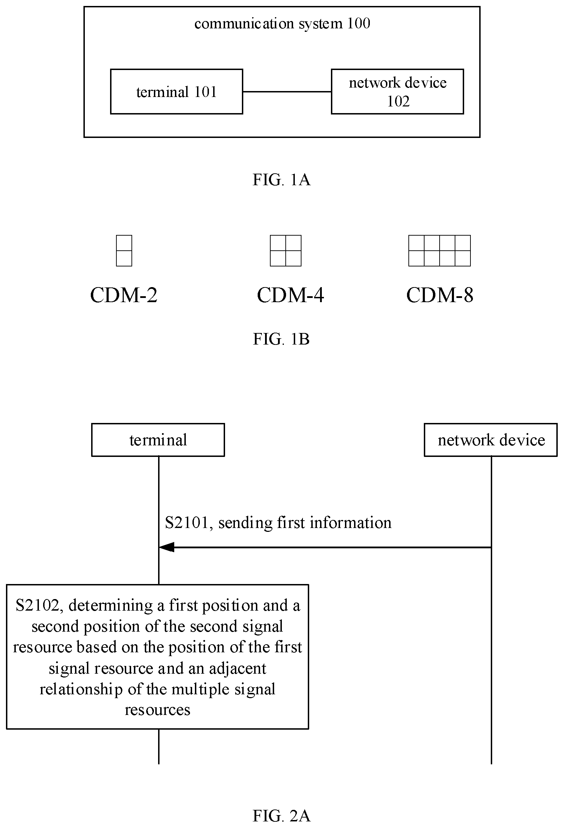

FIG. 1A is a schematic diagram illustrating an architecture of a communication system according to an embodiment of the disclosure. As illustrated in FIG. 1A, the communication system 100 may include a terminal 101 and a network device 102.

In some embodiments, the terminal 101 may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the network device 102 includes at least one of: the access network device, or the core network device.

In some embodiments, the access network device may be a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station, an open base station (Open RAN), a cloud base station (Cloud RAN) in a 6G communication system, a base station in other communication systems, or an access node in a wireless fidelity (Wi-Fi) system, but is not limited herein.

In some embodiments, the technical solution of the disclosure may be applicable to an Open RAN architecture. In this case, interfaces between or within the access network devices involved in embodiments of the disclosure may become internal interfaces of the Open RAN, and processes and information interactions between these internal interfaces may be implemented through software or programs.

In some embodiments, the access network device may include a central unit (CU) and distributed units (DUs), in which the CU may also be called a control unit. A protocol layer of the access network device may be divided by adopting the CU-DU structure. Some of functions of the protocol layer are centrally controlled by the CU, and some of or all of functions of the protocol layer are distributed in the DUs which are centrally controlled by the CU, but is not limited herein.

In some embodiments, the core network device may be a device, or may be multiple devices or device groups. The core network may include at least one of an evolved packet core (EPC), a 5G core network (5GCN), or a next generation core (NGC).

It may be understood that the communication system described in embodiments of the disclosure aims to more clearly illustrate the technical solutions of embodiments of the disclosure, and does not constitute a limitation on the technical solutions provided in embodiments of the disclosure. The skilled in the art may know that with the evolution of the system architecture and the emergence of new service scenarios, the technical solution provided in embodiments of the disclosure are also applicable to similar technical problems.

The following embodiments of the disclosure may be applied to the communication system 100 or some of the subjects illustrated in FIG. 1A, but are not limited herein. The subjects illustrated in FIG. 1A are examples, and the communication system may include all or some of the subjects in FIG. 1A, or may include other subjects than those illustrated in FIG. 1A. The count and the form of the subjects are arbitrary. The subjects may be physical or virtual. A connection relationship between the subjects is an example. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the multiple systems may also be combined (such as, a combination of LTE or LTE-A and 5G, etc.) for application.

In some embodiments of the disclosure, an antenna scale may be expanded to four times the original scale. For example, a count of antenna ports may be 64 or 128.

In some embodiments, when the count of antenna ports is 64 or 128, 64 or 128 CSI-RS ports are needed to realize channel measurement of the antenna ports.

In some embodiments, when the count of antenna ports is greater than 1, a CSI-RS resource may be obtained via aggregation of multiple CDM groups.

In some embodiments, FIG. 1B is a schematic diagram illustrating a CDM group according to an embodiment of the disclosure. As illustrated in FIG. 1B, a CDM group may include a CDM-2 (FD2), a CDM-4 (FD2, TD2), and a CDM-8 (FD2, TD4).

In some embodiments, a count of CSI-RS ports may include 1, 2, 4, 8, 12, 16, 24, and 32. After the count of antenna ports is increased, CSI-RS or CSI reporting needs to be extended or enhanced to support deployment of a larger antenna scale.

In some embodiments, 64 or 128 CSI-RS ports may be redesigned, but such designment may significantly increase workload.

Since a CSI-RS resource design includes multiple different counts of ports, which may extend the CSI-RS resource to meet channel measurement of more antenna ports. Based on this, it is an urgent problem to be solved how to extend the CSI-RS resource to support channel measurement of more antenna ports deployed at a network side in a case that it is ensured that a higher channel measurement accuracy is able to be obtained.

FIG. 2A is a flow chart illustrating an interaction of a method for resource configuration according to an embodiment of the disclosure. The method may be executed by the communication system. As illustrated in FIG. 2A, the method may include the following.

At step S2101, a network device sends first information to a terminal.

In some embodiments, the terminal may receive the first information. For example, the terminal may receive the first information sent from the network device. As another example, the terminal may also receive the first information sent from another entity.

In some embodiments, the first information may include first indication information, the first indication information indicates a position of a first signal resource, the first signal resource is at least one signal resource in multiple signal resources, and different signal resources are used to measure channels corresponding to different antenna ports.

In some embodiments, the multiple signal resources may belong to the same resource set, or may belong to different resource sets.

In some embodiments, the multiple signal resources belong to one or more resource sets, different resource sets have different instances of resource information, and the resource information includes at least one of: a count of ports, a density, a start position of a resource block, a count of resource blocks, or a CDM group type, and the same port index in different instances of resource information corresponds to the same subcarrier position or the same OFDM symbol position.

For example, in a case that the multiple signal resources belong to the same resource set, the multiple signal resources may have the same count of ports, density, start position of a resource block, count of resource blocks, or CDM group type; and in a case that the multiple signal resources belong to different resource sets, the multiple signal resources may have different counts of ports, densities, start positions of resource blocks, counts of resource blocks, or CDM group types.

In some embodiments, the signal resource may be a CSI-RS resource.

In some embodiments, a name of the first indication information is not limited. For example, the name may be "position indication information," "signal resource position indication information," "reference signal resource position indication information", and the like.

In some embodiments, the first signal resource may be any signal resource in the multiple signal resources.

In some embodiments, the first signal resource may also be any several signal resources in the multiple signal resources, and a count of signal resources included in the first signal resource is less than a total count of the multiple signal resources. For example, in a case that the multiple signal resources include 6 signal resources, the first signal resource may include any 2 signal resources of the 6 signal resources.

In some embodiments, the first signal resource may be within one or more adjacent slots, or within one or more adjacent PRBs.

For example, in a case that the first signal resource may be within one or more adjacent slots, other signal resources in the multiple signal resources may be adjacent to the first signal resource in a time domain; and in a case that the first signal resource may be within one or more adjacent PRBs, other signal resources in the multiple signal resources may be adjacent to the first signal resource in a frequency domain.

In some embodiments, other signal resource than the first signal resource in the multiple signal resources is a second signal resource.

In some embodiments, the second signal resource may include multiple CDM groups, the first information may also include second indication information, the second indication information may indicate a position of a first CDM group, the first CDM group is a CDM group(s) in the multiple CDM groups other than a second CDM group, and the second CDM group is any CDM group in the multiple CDM groups of the second signal resource.

In some embodiments, the second indication information may also include a time domain position and a frequency domain position of the first CDM group.

In some embodiments, the second indication information may include a positional relationship of multiple CDM groups of the first signal resource.

In some embodiments, a name of the second indication information is not limited. For example, the name may be "position indication information," "CDM group position indication information," "information indicating a position of a CDM group", and the like.

In some embodiments, the position may include a time domain position and a frequency domain position.

In some embodiments, the position may be a start position. For example, the position may include a time domain start position and a frequency domain start position.

In some embodiments, the position may also be an end position. For example, the position may include a time domain end position and a frequency domain end position.

It should be noted that the position may also be other predefined information that characterizes a position, which is not limited in embodiments of the disclosure.

At block S2102, the terminal determines a first position and a second position of the second signal resource based on the position of the first signal resource and an adjacent relationship of the multiple signal resources.

In some embodiments, the first position may be the time domain position or the frequency domain position, and the second position may be the time domain position or the frequency domain position different from the first position.

For example, in a case that the first position is the time domain position, the second position is the frequency domain position; and in a case that the first position is the frequency domain position, the second position is the time domain position.

In some embodiments, the adjacent relationship of the multiple signal resources may include an adjacent relationship between the first signal resource and the second signal resource, and an adjacent relationship between the second signal resources.

For example, in a case that 3 signal resources are configured for the terminal by the network device, identifiers of the signal resources are 0, 1, and 2 respectively, the signal resource 0 is the first signal resource, and the signal resource 1 and the signal resource 2 are the second signal resources, the adjacent relationship of the 3 signal resources may be that the signal resource 1 is adjacent to the signal resource 0, and the signal resource 2 is adjacent to the signal resource 1.

In some embodiments, the adjacent relationship of the multiple signal resources may be predefined.

In an implementation, the adjacent relationship of the multiple signal resources may be predefined based on the identifiers of the signal resources. For example, the signal resource 0 is adjacent to the signal resource 1, and the signal resource 2 is adjacent to the signal resource 1.

In some embodiments, the adjacent relationship of the multiple signal resources may be indicated by the network device.

In an implementation, the first information may include third indication information, and the third indication information may indicate the adjacent relationship of the multiple signal resources.

In some embodiments, the second signal resource may include one CDM group, and the terminal may determine a first position of the first signal resource as the first position of the second signal resource; determine an adjacent position to a second position of the first signal resource; and determine the second position of the second signal resource based on the adjacent position and the adjacent relationship of the multiple signal resources.

For example, in a case that the first position is the time domain position, the time domain position of the first signal resource may be determined as the time domain position of the second signal resource; and in a case that the first position is the frequency domain position, the frequency domain position of the first signal resource may be determined as the frequency domain position of the second signal resource.

For another example, in a case that the first position is the time domain start position, the time domain start position of the first signal resource may be determined as a time domain start position of the second signal resource; and in a case that the first position is the frequency domain start position, the frequency domain start position of the first signal resource may be determined as a frequency domain start position of the second signal resource.

In some embodiments, the adjacent position may include an adjacent time domain position or an adjacent frequency domain position.

For example, in a case that the second position is the time domain position, the adjacent position may be an adjacent time domain position to the time domain position of the first signal resource; and in a case that the second position is the frequency domain position, the adjacent position may be an adjacent frequency domain position to the frequency domain position of the first signal resource.

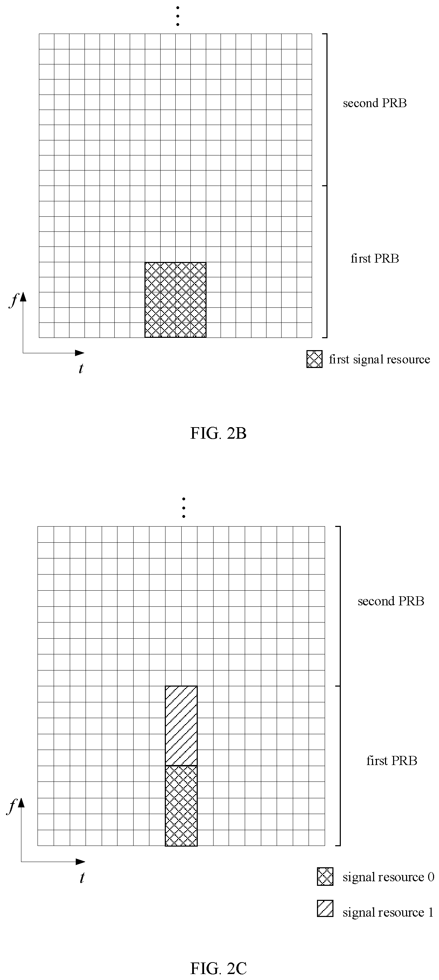

FIG. 2B is a schematic diagram illustrating a first signal resource according to an embodiment of the disclosure. As illustrated in FIG. 2B, in a case that the second position is the time domain position, the adjacent time domain position may be located at the left of the second position, or may be located at the right of the second position; and in a case that the second position is the frequency domain position, the adjacent frequency domain position may be located above the second position.

It should be noted that the position of the first signal resource illustrated in FIG. 2B is an exemplary illustration, which is not limited in the disclosure.

In some embodiments, after determining the adjacent position to the second position of the first signal resource, the terminal may determine the second position of each second signal resource based on the adjacent position and the adjacent relationship of the multiple signal resources.

For example, in a case that 2 signal resources are configured for the terminal by the network device, identifiers of the signal resources are 0 and 1 respectively, the signal resource 0 is the first signal resource, the signal resource 1 is the second signal resource, and the first position is the time domain position, the time domain position of the signal resource 0 may be determined as a time domain position of the signal resource 1, and an adjacent position to a frequency domain position of the signal resource 0 may be determined as a frequency domain position of the signal resource 1.

FIG. 2C is a schematic diagram illustrating a position of a signal resource according to an embodiment of the disclosure. As illustrated in FIG. 2C, a time domain position of a signal resource 1 is the same as a time domain position of a signal resource 0, that is, an OFDM symbol position of the signal resource 1 is the same as an OFDM symbol position of the signal resource 0, and a frequency domain position of the signal resource 1 is adjacent to a frequency domain position of the signal resource 0.

For another example, in a case that 3 signal resources are configured for the terminal by the network device, identifiers of the signal resources are 0, 1, and 2 respectively, the signal resource 0 is the first signal resource, the signal resource 1 and the signal resource 2 are the second signal resources, and the first position is the time domain position, a time domain position of the signal resource 0 may be determined as a time domain position of both the signal resource 1 and the signal resource 2, and an adjacent position to a frequency domain position of the signal resource 0 may be determined as a frequency domain position of both the signal resource 1 and the signal resource 2.

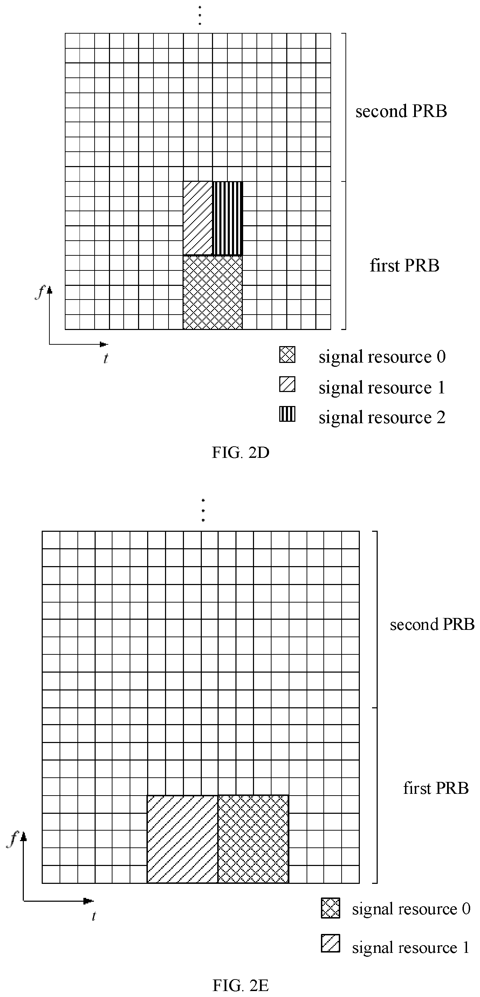

FIG. 2D is a schematic diagram illustrating a position of a signal resource according to an embodiment of the disclosure. As illustrated in FIG. 2D, a time domain position of both a signal resource 1 and a signal resource 2 is the same as a time domain position of a signal resource 0, that is, an OFDM symbol position of both the signal resource 1 and the signal resource 2 is the same as an OFDM symbol position of the signal resource 0, and a frequency domain position of both the signal resource 1 and the signal resource 2 is adjacent to a frequency domain position of the signal resource 0.

In some embodiments, FIG. 2D may also be interpreted as: determining a time domain start position of the signal resource 0 as a time domain start position of the signal resource 1, determining an adjacent position to a frequency domain end position of the signal resource 0 as a frequency domain start position of the signal resource 1, determining a time domain end position of the signal resource 1 as a time domain start position of the signal resource 2, and determining a frequency domain position of the signal resource 1 as a frequency domain position of the signal resource 2.

For another example, in a case that 2 signal resources are configured for the terminal by the network device, identifiers of the signal resources are 0 and 1 respectively, the signal resource 0 is the first signal resource, the signal resource 1 is the second signal resource, and the first position is the frequency domain position, a frequency domain position of the signal resource 0 may be determined as a frequency domain position of the signal resource 1, and an adjacent position to the time domain position of the signal resource 0 may be determined as the time domain position of the signal resource 1.

FIG. 2E is a schematic diagram illustrating a position of a signal resource according to an embodiment of the disclosure. As illustrated in FIG. 2E, a frequency domain position of a signal resource 1 is the same as a frequency domain position of a signal resource 0, and a time domain position of the signal resource 1 is adjacent to a time domain position of the signal resource 0.

For another example, in a case that 3 signal resources are configured for the terminal by the network device, identifiers of the signal resources are 0, 1, and 2 respectively, the signal resource 0 is the first signal resource, the signal resource 1 and the signal resource 2 are the second signal resources, and the first position is the frequency domain position, the frequency domain position of the signal resource 0 may be determined as a frequency domain position of both the signal resource 1 and the signal resource 2, and an adjacent position to a time domain position of the signal resource 0 may be determined as a time domain position of both the signal resource 1 and the signal resource 2.

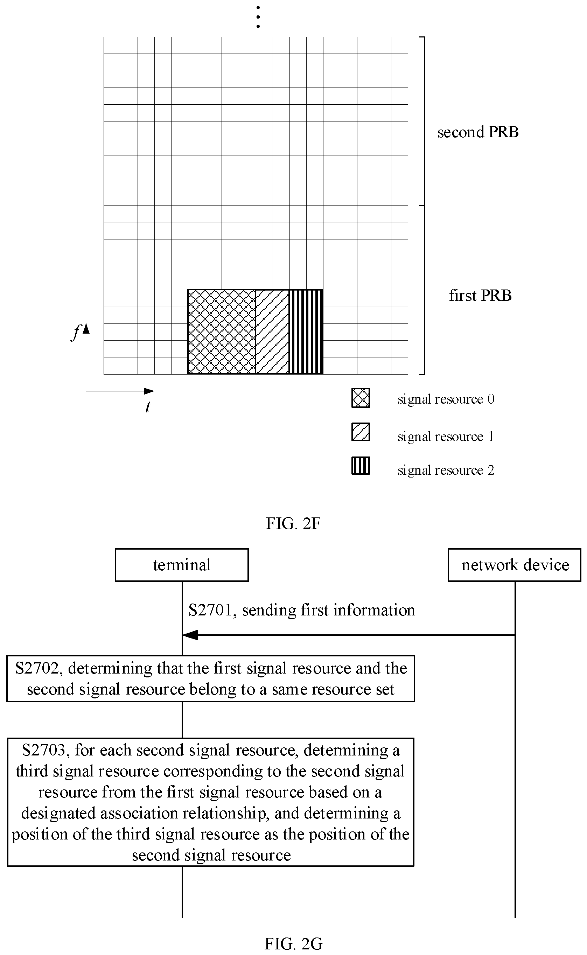

FIG. 2F is a schematic diagram illustrating a position of a signal resource according to an embodiment of the disclosure. As illustrated in FIG. 2F, a frequency domain position of both a signal resource 1 and a signal resource 2 is the same as a frequency domain position of a signal resource 0, that is, a subcarrier position of both the signal resource 1 and the signal resource 2 is the same as a subcarrier position of the signal resource 0, and a time domain position of both the signal resource 1 and the signal resource 2 is adjacent to a time domain position of the signal resource 0.

In some embodiments, FIG. 2F may also be interpreted as: determining a frequency domain start position of the signal resource 0 as a frequency domain start position of the signal resource 1, determining an adjacent position to a time domain end position of the signal resource 0 as a time domain start position of the signal resource 1, determining a time domain end position of the signal resource 1 as a time domain start position of the signal resource 2, and determining a frequency domain end position of the signal resource 1 as a frequency domain start position of the signal resource 2.

In some embodiments, the position of the second signal resource may be determined based on the position of the first signal resource, the adjacent relationship of the multiple signal resources, and a CDM group type of each signal resource.

For example, in a case that the CDM group type of the second signal resource is the same as the CDM group type of the first signal resource, the time domain position of the first signal resource may be determined as the time domain position of the second signal resource, and an adjacent position to the frequency domain position of the first signal resource may be determined as the frequency domain position of the second signal resource; and in a case that the CDM group type of the second signal resource is different from the CDM group type of the first signal resource, the frequency domain position of the first signal resource may be determined as the frequency domain position of the second signal resource, and an adjacent position to the time domain position of the first signal resource may be determined as the time domain position of the second signal resource.

In some embodiments, the second signal resource may include multiple CDM groups, and the terminal may determine the first position of the first signal resource as a first position of a second CDM group of the second signal resource; determine an adjacent position to a second position of the first signal resource; determine a second position of the second CDM group based on the adjacent position and the adjacent relationship of the multiple signal resources; and determine a first position and a second position of the first CDM group based on the second indication information.

In some embodiments, in a case that the first position is the time domain position, the time domain position of the first signal resource may be determined as a time domain position of the second CDM group of the second signal resource; and in a case that the first position is the frequency domain position, the frequency domain position of the first signal resource may be determined as a frequency domain position of the second CDM group of the second signal resource.

In some embodiments, in a case that the first position is the time domain start position, the time domain start position of the first signal resource may be determined as a time domain start position of the second CDM group of the second signal resource; and in a case that the first position is the frequency domain start position, the frequency domain start position of the first signal resource may be determined as a frequency domain start position of the second CDM group of the second signal resource.

It should be noted that, for a method for determining the first position and the second position of the second CDM group, please refer to the above method for determining the first position and the second position of the second signal resource, which is not repeated herein.

In some embodiments, in a case that the second indication information includes a positional relationship of the multiple CDM groups of the first signal resource, the terminal may determine a positional relationship of multiple CDM groups in the first CDM group based on the positional relationship of the multiple CDM groups of the first signal resource; and determine a first position and a second position of each CDM group in the first CDM group based on the positional relationship of the multiple CDM groups in the first CDM group.

In some embodiments, the positional relationship of the multiple CDM groups of the first signal resource may include a position type and/or a position offset in the multiple CDM groups, and the position type may include at least one of FDM, TDM, or CDM.

In an implementation, in a case that the position type of the multiple CDM groups of the first signal resource is the FDM, that is, time domain start positions of the multiple CDM groups are the same and frequency domain positions are different, the first position and the second position of the first CDM group may be determined in an FDM manner. For example, a time domain start position of the first CDM group may be the same as a time domain start position of the second CDM group, and a frequency domain position of the first CDM group is adjacent to a frequency domain position of the second CDM group, that is, for each CDM group in the first CDM group, the time domain position is the same as the time domain start position of the second CDM group, and the frequency domain positions are in an adjacent relationship with each other. For example, in a case that the first CDM group includes a CDM group 1, a CDM group 2, and a CDM group 3, each of the time domain start positions of the CDM group 1, the CDM group 2, and the CDM group 3 is the same as the time domain start position of the second CDM group, a frequency domain position of the CDM group 1 is adjacent to a frequency domain position of the second CDM group, a frequency domain position of the CDM group 2 is adjacent to the frequency domain position of the CDM group 1, and a frequency domain position of CDM group 3 is adjacent to the frequency domain position of the CDM group 2.

In another implementation, in a case that the position type of the multiple CDM groups of the first signal resource is the FDM, that is, the time domain start positions of the multiple CDM groups are the same and the frequency domain positions are different, the first position and the second position of the first CDM group may be determined in an FDM manner based on a position offset in the multiple CDM groups of the first signal resource. For example, the time domain start position of the first CDM group may be the same as the time domain start position of the second CDM group, and a frequency domain position of each CDM group in the first CDM group may be determined based on the position offset in the multiple CDM groups in the first CDM group.

In some embodiments, position offsets corresponding to CDM groups with the same index in different signal resources may be the same. For example, if the first signal resource includes 3 CDM groups with indexes of 1, 2, and 3 respectively, and the second signal resource includes 3 CDM groups with indexes of 1, 2, and 3 respectively, a CDM group 1 of the second signal resource is the second CDM group, and a CDM group 2 and a CDM group 3 of the second signal resource are the first CDM group, then a position offset of the CDM group 2 in the first CDM group may be determined based on a position offset of the CDM group 2 of the first signal resource, and a position offset of the CDM group 3 in the first CDM group may be determined based on a position offset of the CDM group 3 of the first signal resource.

In some embodiments, in a case that the first CDM group may include multiple CDM groups, positions of some of the first CDM groups may be the same as the position of the first signal resource, and positions of some of the first CDM groups may be other positions different from the position of the first signal resource.

It should be noted that the network device may not send the second indication information to the terminal, and the second indication information is predefined, or the second indication information is default information.

It should also be noted that the above is the manner for determining the position of the first CDM group and the position of the second CDM group of one second signal resource, and the manner may be used for determining the position of the first CDM group and the position of the second CDM group of each second signal resource, which is not repeated herein.

In some embodiments, the first signal resource may include multiple CDM groups, and the terminal may determine a first position of a third CDM group of the first signal resource as the first position of the second signal resource, in which the third CDM group is any CDM group in the multiple CDM groups of the first signal resource; determine an adjacent position to a second position of the third CDM group of the first signal resource; and determine the second position of the second signal resource based on the adjacent position and the adjacent relationship of the multiple signal resources.

In some embodiments, the third CDM group may be a CDM group with a maximum index or a CDM group with a minimum index in the first signal resource.

It should be noted that, for an implementation of determining the first position of the second signal resource based on the first position of the third CDM group of the first signal resource, please refer to the above implementation of determining the first position of the second signal resource based on the first position of the first signal resource. For an implementation of determining the adjacent position to the second position of the third CDM group of the first signal resource, please refer to the above implementation of determining the adjacent position to the second position of the first signal resource. For an implementation of determining the second position of the second signal resource based on the second position of the third CDM group of the first signal resource, please refer to the above implementation of determining the second position of the second signal resource based on the second position of the first signal resource, which is not repeated herein.

In some embodiments, in a case that the second signal resource includes multiple second signal resources, positions of some of the second signal resources may be determined based on the position of the third CDM group of the first signal resource, and positions of some of the second signal resources may be determined based on a position of a fourth CDM group of the first signal resource, in which the fourth CDM group may be a CDM group(s) in the multiple CDM groups of the first signal resource other than the third CDM group.

For example, in a case that the first signal resource includes a signal resource 0, and the signal resource 0 includes a CDM group 1 and a CDM group 2, and the second signal resource includes a signal resource 1 and a signal resource 2, a position of the signal resource 1 may be determined based on a position of the CDM group 1 of the signal resource 0, and a position of the signal resource 2 may be determined based on a position of the CDM group 2 of the signal resource 0.

It should also be noted that, for an implementation of determining the first position of the second signal resource based on a first position of the fourth CDM group of the first signal resource, please refer to the above implementation of determining the first position of the second signal resource based on the first position of the first signal resource. For an implementation of determining an adjacent position to a second position of the fourth CDM group of the first signal resource, please refer to the above implementation of determining the adjacent position to the second position of the first signal resource. For an implementation of determining the second position of the second signal resource based on the second position of the fourth CDM group of the first signal resource, please refer to the above implementation of determining the second position of the second signal resource based on the second position of the first signal resource, which is not repeated herein.

By employing the above method, the terminal may determine the position of the second signal resource based on the position of the first signal resource indicated by the network device. In this way, the network device only needs to designate the position of the first signal resource, and signaling indication overhead may be reduced. Further, the position of the second signal resource includes a position adjacent to the position of the first signal resource. In this way, time-frequency domain correlation in multiple channels corresponding to the multiple signal resources may be ensured, thus improving accuracy of channel measurement.

The method in embodiments of the disclosure may include at least one of steps S2101 to S2102. For example, step S2101 may be implemented as an independent embodiment; step S2102 may be implemented as an independent embodiment; and step S2101 + step S2102 may be implemented as an independent embodiment, which is not limited herein.

In some embodiments, please refer to other alternative implementations described before or after the embodiments corresponding to FIG. 2A.

FIG. 2G is a flow chart illustrating an interaction of a method for resource configuration according to an embodiment of the disclosure. The method may be executed by the communication system. As illustrated in FIG. 2G, the method may include the following.

At step S2701, a network device sends first information to a terminal.

For an alternative implementation of step S2701, please refer to the alternative implementation of step S2101 in FIG. 2A and other related parts in the embodiments involved in FIG. 2A, which is not repeated herein.

In some embodiments, the first information may include first indication information, the first indication information indicates a position of a first signal resource, the first signal resource is at least one signal resource in multiple signal resources, and different signal resources are used to measure channels corresponding to different antenna ports.

At step S2702, the terminal determines that the first signal resource and a second signal resource belong to the same resource set.

In some embodiments, in a case that the terminal determines that resource information of the first signal resource is the same as resource information of the second signal resource, it may be determined that the first signal resource and the second signal resource belong to the same resource set.

In some embodiments, the resource information may include at least one of: a count of ports, a density, a start position of a resource block, a count of resource blocks, or a CDM group type, in which the same port index in different instances of resource information corresponds to the same subcarrier position or the same OFDM symbol position.

In some embodiments, the network device may also indicate, to the terminal, an identifier of a resource set to which each signal resource belongs, and the terminal may determine whether the first signal resource and the second signal resource belong to the same resource set based on the identifier of the resource set.

At step S2703, for each second signal resource, the terminal determines a third signal resource corresponding to the second signal resource from the first signal resource based on a designated association relationship, and determines a position of the third signal resource as the position of the second signal resource.

In some embodiments, the designated association relationship may include a correspondence between different second signal resources and different first signal resources.

For example, in a case that the first signal resource includes a signal resource 0 and a signal resource 1, and the second signal resource includes a signal resource 2 and a signal resource 3, the designated association relationship may be that the signal resource 0 corresponds to the signal resource 2, and the signal resource 1 corresponds to the signal resource 3.

In some embodiments, the designated association relationship may be predefined.

In some embodiments, the designated association relationship may be indicated by the network device.

In an implementation, the first information may also include fourth indication information, and the fourth indication information may indicate the designated association relationship.

In some embodiments, in a case that the second signal resource includes one signal resource, the position of any first signal resource may be determined as the position of the second signal resource.

In some embodiments, in a case that the second signal resource includes multiple signal resources, for each second signal resource, a third signal resource corresponding to the second signal resource may be determined from the first signal resource based on the designated association relationship, and the position of the third signal resource may be determined as the position of the second signal resource.

For example, in a case that the designated association relationship is that the signal resource 0 corresponds to the signal resource 2, and the signal resource 1 corresponds to the signal resource 3, for the signal resource 2, it may be determined that the signal resource 0 is the third signal resource corresponding to the signal resource 2, and the position of the signal resource 0 is determined as the position of the signal resource 2; and it may be determined that the signal resource 1 is the third signal resource corresponding to the signal resource 3, and the position of the signal resource 1 is determined as the position of the signal resource 3.

In some embodiments, determining the position of the third signal resource as the position of the second signal resource may be interpreted as determining a time domain position of the third signal resource as a time domain position of the second signal resource, and determining a frequency domain position of the third signal resource as a frequency domain position of the second signal resource.

By employing the above method, the terminal may determine the position of the second signal resource based on the position of the first signal resource indicated by the network device. In this way, the network device only needs to designate the position of the first signal resource, thus signaling indication overhead may be reduced. Further, the position of the second signal resource includes a position same as the position of the first signal resource. In this way, time-frequency domain correlation in multiple channels corresponding to the multiple signal resources may be ensured, and accuracy of channel measurement may be improved.

The method in the embodiments of the disclosure may include at least one of steps S2701 to S2703. For example, step S2701 may be implemented as an independent embodiment; step S2702 may be performed as an independent embodiment; step S2703 may be implemented as an independent embodiment; and step S2702 + step S2703 may be implemented as an independent embodiment, which is not limited herein.

In some embodiments, all steps S2701 to S2703 are alternative steps. For example, step S2701 and step S2702 are alternative steps, and one or more of the steps may be omitted or substituted in different embodiments.

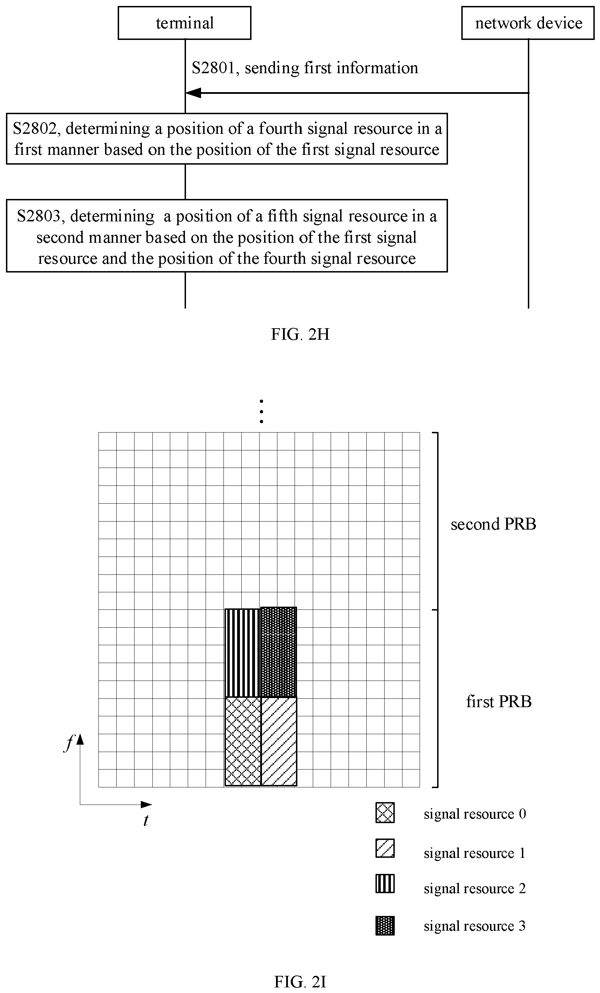

FIG. 2H is a flow chart illustrating an interaction of a method for resource configuration according to an embodiment of the disclosure. The method may be executed by the communication system. As illustrated in FIG. 2H, the method may include the following.

At step S2801, a network device sends first information to a terminal.

For an alternative implementation of step S2801, please refer to the alternative implementation of step S2101 in FIG. 2A and other related parts in the embodiments involved in FIG. 2A, which is not repeated herein.

In some embodiments, the first information may include first indication information, the first indication information indicates a position of a first signal resource, the first signal resource is at least one signal resource in multiple signal resources, and different signal resources are used to measure channels corresponding to different antenna ports.

At step S2802, the terminal determines a position of a fourth signal resource in a first manner based on the position of the first signal resource.

In some embodiments, the first manner may be any manner in a designated manner.

In some embodiments, the designated manner includes at least one of: a TDM manner, a FDM manner, or a CDM manner.

In some embodiments, the fourth signal resource may be some of signal resources in the second signal resource.

In some embodiments, the fourth signal resource may be predefined.

In some embodiments, the network device may also indicate the fourth signal resource.

In some embodiments, in a case that the first manner is the TDM manner, the position of the fourth signal resource may be determined in the TDM manner based on the position of the first signal resource.

In some embodiments, in a case that the first manner is the FDM manner, the position of the fourth signal resource may be determined in the FDM manner based on the position of the first signal resource.

It should be noted that, for determining the position of the fourth signal resource in the TDM manner, please refer to determining the position of the second signal resource when the first position is the frequency domain position at step S2102; for determining the position of the fourth signal resource in the FDM manner, please refer to determining the position of the second signal resource when the first position is the time domain position at step S2102.

In some embodiments, in a case that the first manner is the CDM manner, the position of the fourth signal resource may be determined in the CDM manner based on the position of the first signal resource.

It should also be noted that, for determining the position of the fourth signal resource in the CDM manner, please refer to determining the position of the second signal resource at step S2703.

At step S2803, the terminal determines a position of a fifth signal resource in a second manner based on the position of the first signal resource and the position of the fourth signal resource.

In some embodiments, the second manner may be at least one manner in the designated manner other than the first manner.

For example, in a case that the first manner is the FDM manner, the second manner may be the TDM manner and/or the CDM manner. In a case that the first manner is the TDM manner, the second manner may be the FDM manner and/or the CDM manner. In a case that the first manner is the CDM manner, the second manner may be the TDM manner and/or the FDM manner.

In some embodiments, the fifth signal resource may be a signal resource(s) in the second signal resource other than the fourth signal resource.

In some embodiments, after determining the position of the fourth signal resource in the first manner, the terminal may determine the position of the fifth signal resource in the second manner based on the position of the first signal resource and the position of the fourth signal resource.

FIG. 2I is a schematic diagram illustrating a position of a signal resource according to an embodiment of the disclosure. As illustrated in FIG. 2I, a signal resource 0 is a first signal resource, a signal resource 1 is a fourth signal resource, and a signal resource 2 and a signal resource 3 are fifth signal resources. The terminal may determine a position of the signal resource 1 in the TDM manner based on a position of the signal resource 0, and determine positions of the signal resource 2 and the signal resource 3 in the FDM manner based on the positions of the signal resource 0 and the signal resource 1.

In some embodiments, the terminal may determine a position of a sixth signal resource in a third manner, and determine a position of a seventh signal resource in a fourth manner, based on the position of the first signal resource and the position of the fourth signal resource.

In some embodiments, the third manner may be any manner in the second manner, and the fourth manner may be a manner in the second manner different from the third manner.

In some embodiments, the sixth signal resource may be some of signal resources in the fifth signal resource, and the seventh signal resource may be other signal resource in the fifth signal resource than the sixth signal resource.

For example, in a case that the second manner is the FDM manner and the TDM manner, the third manner may be the FDM manner, the fourth manner may be the TDM manner, the position of the sixth signal resource may be determined in the FDM manner, and the position of the seventh signal resource may be determined in the TDM manner.

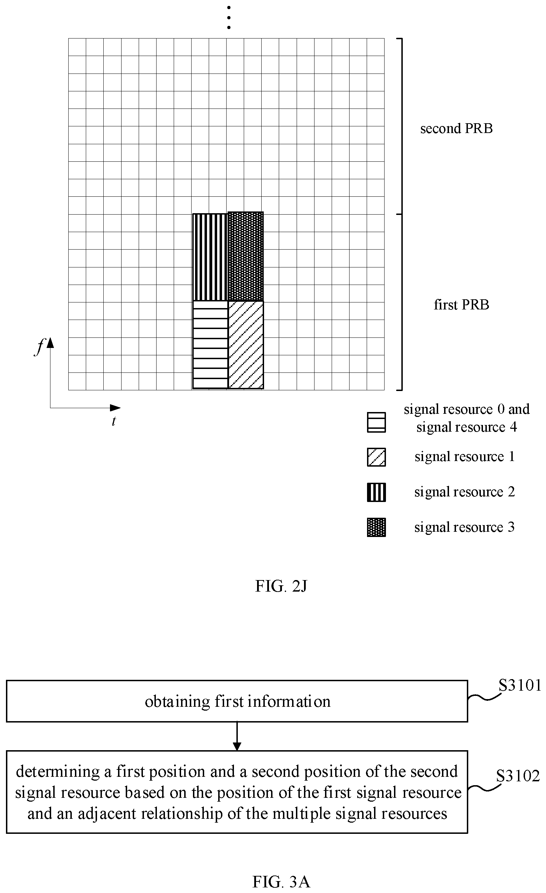

FIG. 2J is a schematic diagram illustrating a position of a signal resource according to an embodiment of the disclosure. As illustrated in FIG. 2J, a signal resource 0 is a first signal resource, a signal resource 1 is a fourth signal resource, a signal resource 2 and a signal resource 3 are sixth signal resources, and a signal resource 4 is a seventh signal resource. The terminal may determine a position of the signal resource 1 in the TDM manner based on a position of the signal resource 0, determine positions of the signal resource 2 and the signal resource 3 in the FDM manner based on the positions of the signal resource 0 and the signal resource 1, and determine the position of the signal resource 4 in the CDM manner based on the position of the signal resource 0 (the position of the signal resource 4 is the same as the position of the signal resource 0; alternatively, a position of an RE of the signal resource 4 is the same as a position of an RE of the signal resource 0).

By employing the above method, the terminal may determine the position of the second signal resource based on the position of the first signal resource indicated by the network device. In this way, the network device only needs to designate the position of the first signal resource, thus reducing signaling indication overhead. Further, the position of the second signal resource includes a position same as and/or adjacent to the position of the first signal resource. In this way, time-frequency domain correlation in multiple channels corresponding to the multiple signal resources may be ensured, and accuracy of channel measurement may be improved.

The method in embodiments of the disclosure may include at least one of steps S2801 to S2803. For example, step S2801 may be implemented as an independent embodiment; step S2802 may be implemented as an independent embodiment; step S2803 may be implemented as an independent embodiment; and step S2802 + step S2803 may be implemented as an independent embodiment, which is not limited herein.

In some embodiments, all steps S2801 to S2803 are alternative steps. For example, step S2801 are alternative steps, and one or more of the steps may be omitted or substituted in different embodiments.

In some embodiments, names of information, etc. are not limited to the names recorded in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be used interchangeably.

In some embodiments, "obtaining", "acquiring", "getting", "receiving", "transmission", "bidirectional transmission", "sending and/or receiving" may be interchangeable, and may be interpreted as many meanings such as receiving from other entities, obtaining from a protocol, obtaining from a higher layer, obtaining by self-processing, autonomous implementation, etc.

In some embodiments, the terms such as "sending", "emitting", "reporting", "issuing", "transmitting", "bi-directionally transmitting", "sending and/or receiving" or the like may be used interchangeably.

In some embodiments, the terms such as "certain", "predetermined", "preset", "set", "indicated", "a certain", "any", "first", or the like may be used interchangeable. "Designated A", "predetermined A", "preset A", "set A", "indicated A", "an A", "any A", "first A" may be interpreted as A predefined in a protocol, or as A obtained via setting, configuration, or indication, or as certain A, an A, any A, or first A, etc., but is not limited herein.

FIG. 3A is a flow chart illustrating a method for resource configuration according to an embodiment of the disclosure. As illustrated in FIG. 3A, embodiments of the disclosure relate to a method for resource configuration, and the method may be executed by a terminal. The method may include the following.

At step S3101, first information is obtained.

For an alternative implementation of step S3101, please refer to the alternative implementation of step S2101 in FIG. 2A and other related parts in the embodiments involved in FIG. 2A, which is not repeated herein.

In some embodiments, the terminal may receive the first information sent from a network device, but is not limited herein, and the terminal may also receive the first information sent from another entity.

In some embodiments, the terminal may obtain the first information prescribed by a protocol.

In some embodiments, the terminal may obtain the first information from a higher layer.

In some embodiments, the terminal may obtain the first information by performing processing.

In some embodiments, the first information may include first indication information, the first indication information indicates a position of a first signal resource, the first signal resource is at least one signal resource in multiple signal resources, and different signal resources are used to measure channels corresponding to different antenna ports.

At step S3102, a first position and a second position of a second signal resource are determined based on the position of the first signal resource and an adjacent relationship of the multiple signal resources.

For an alternative implementation of step S3102, please refer to the alternative implementation of step S2102 in FIG. 2A and other related parts in the embodiments involved in FIG. 2A, which is not repeated herein.

In some embodiments, all the above blocks are alternative blocks.

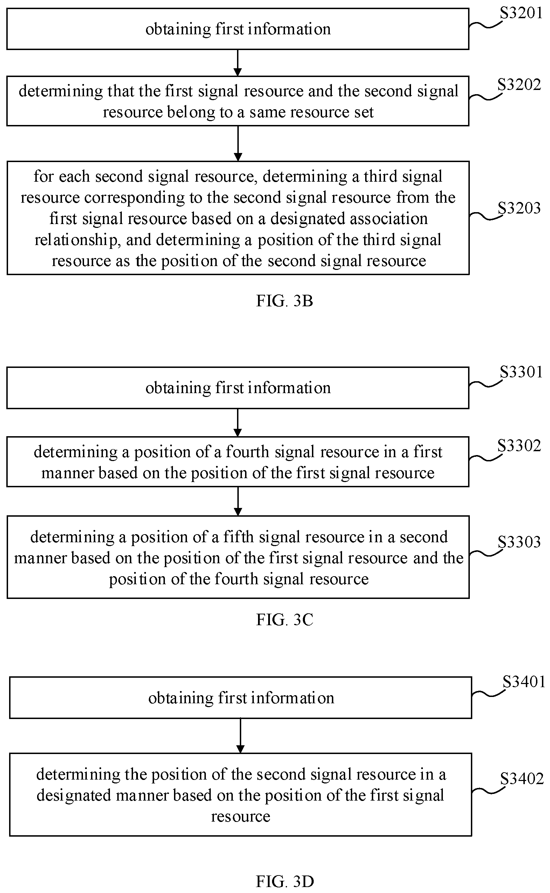

FIG. 3B is a flow chart illustrating a method for resource configuration according to an embodiment of the disclosure. As illustrated in FIG. 3B, embodiments of the disclosure relate to a method for resource configuration, and the method may be executed by a terminal. The method may include the following.

At step S3201, first information is obtained.

For an alternative implementation of step S3201, please refer to the alternative implementation of step S2101 in FIG. 2A and other related parts in the embodiments involved in FIG. 2A, which is not repeated herein.

In some embodiments, the first information may include first indication information, the first indication information indicates a position of a first signal resource, the first signal resource is at least one signal resource in multiple signal resources, and different signal resources are used to measure channels corresponding to different antenna ports.

At step S3202, it is determined that the first signal resource and a second signal resource belong to the same resource set.

For an alternative implementation of step S3202, please refer to the alternative implementation of step S2702 in FIG. 2G and other related parts in the embodiments involved in FIG. 2G, which is not repeated herein.

At step S3203, for each second signal resource, a third signal resource corresponding to the second signal resource is determined from the first signal resource based on a designated association relationship, and a position of the third signal resource is determined as the position of the second signal resource.

For an alternative implementation of step S3203, please refer to the alternative implementation of step S2703 in FIG. 2G and other related parts in the embodiments involved in FIG. 2G, which is not repeated herein.

In some embodiments, all the above blocks are alternative blocks.

FIG. 3C is a flow chart illustrating a method for resource configuration according to an embodiment of the disclosure. As illustrated in FIG. 3C, embodiments of the disclosure relate to a method for resource configuration, and the method may be executed by a terminal. The method may include the following.

At step S3301, first information is obtained.

For an alternative implementation of step S3301, please refer to the alternative implementation of step S2101 in FIG. 2A and other related parts in the embodiments involved in FIG. 2A, which is not repeated herein.

In some embodiments, the first information may include first indication information, the first indication information indicates a position of a first signal resource, the first signal resource is at least one signal resource in multiple signal resources, and different signal resources are used to measure channels corresponding to different antenna ports.

At step S3302, a position of a fourth signal resource is determined in a first manner based on the position of the first signal resource.

For an alternative implementation of step S3302, please refer to the alternative implementation of step S2802 in FIG. 2H and other related parts in the embodiments involved in FIG. 2H, which is not repeated herein.

At step S3303, a position of a fifth signal resource is determined in a second manner based on the position of the first signal resource and the position of the fourth signal resource.

For an alternative implementation of step S3303, please refer to the alternative implementation of step S2803 in FIG. 2H and other related parts in the embodiments involved in FIG. 2H, which is not repeated herein.

In some embodiments, all the above blocks are alternative blocks.

FIG. 3D is a flow chart illustrating a method for resource configuration according to an embodiment of the disclosure. As illustrated in FIG. 3D, embodiments of the disclosure relate to a method for resource configuration, and the method may be executed by a terminal. The method may include the following.

At step S3401, first information is obtained.

For an alternative implementation of step S3401, please refer to the alternative implementation of step S2101 in FIG. 2A and other related parts in the embodiments involved in FIG. 2A, which is not repeated herein.

At step S3402, a position of a second signal resource is determined in a designated manner based on the position of the first signal resource.

For an alternative implementation of step S3402, please refer to the alternative implementations of step S2102 in FIG. 2A, step S3102 in FIG. 3A, steps S3201 to S3203 in FIG. 3B, steps S3301 to S3302 in FIG. 3C, and other related parts in the embodiments involved in FIG. 2, FIG. 3A, FIG. 3B, and FIG. 3C, which is not repeated herein.

In some embodiments, the designated manner may include at least one of: a TDM manner, an FDM manner, or a CDM manner.

In some embodiments, for an implementation of determining, by the terminal, the position of the second signal resource in the TDM or FDM manner, please refer to the implementation of step S3102 in FIG. 3A.

In some embodiments, for an implementation of determining, by the terminal, the position of the second signal resource in the CDM manner, please refer to the implementation of steps S3201 to S3203 in FIG. 3B.

In some embodiments, for an implementation of determining, by the terminal, the position of the second signal resource in two or three manners among the TDM manner, the FDM manner, and the CDM manner, please refer to the implementation of steps S3301 to S3302 in FIG. 3C.

In some embodiments, all the above blocks are alternative blocks.

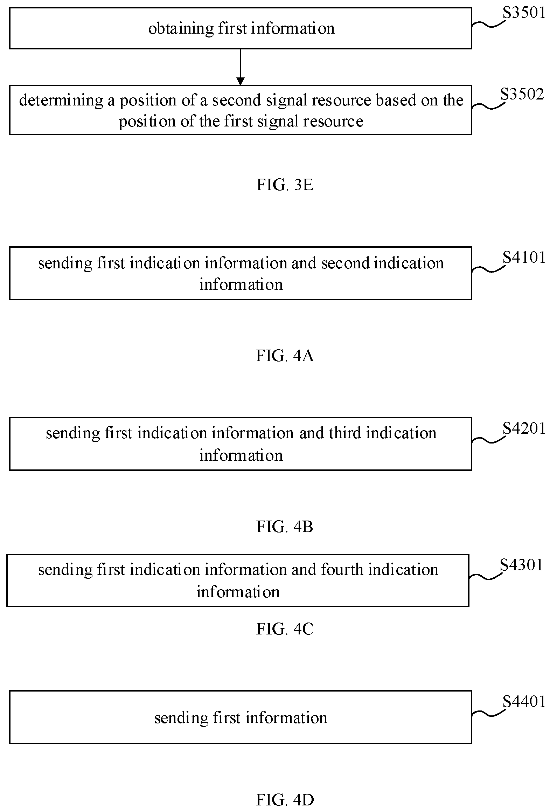

FIG. 3E is a flow chart illustrating a method for resource configuration according to an embodiment of the disclosure. As illustrated in FIG. 3E, embodiments of the disclosure relate to a method for resource configuration, and the method may be executed by a terminal. The method may include the following.

At step S3501, first information is obtained.

For an alternative implementation of step S3501, please refer to the alternative implementation of step S2101 in FIG. 2A and other related parts in the embodiments involved in FIG. 2A, which is not repeated herein.

At step S3502, a position of a second signal resource is determined based on the position of the first signal resource.

For an alternative implementation of step S3502, please refer to the alternative implementations of step S2102 in FIG. 2A, step S3102 in FIG. 3A, steps S3201 to S3203 in FIG. 3B, steps S3301 to S3302 in FIG. 3C, step S3402 in FIG. 3D, and other related parts in the embodiments involved in FIG. 2, FIG. 3A, FIG. 3B, FIG. 3C, and FIG. 3D, which is not repeated herein.

In some embodiments, determining the position of the second signal resource based on the position of the first signal resource includes:
determining the position of the second signal resource in a designated manner based on the position of the first signal resource,
in which the designated manner includes at least one of: a TDM manner, a FDM manner, or a CDM manner.

In some embodiments, the position includes a time domain position and a frequency domain position, and the designated manner includes the TDM manner or the FDM manner; and determining the position of the second signal resource in the designated manner based on the position of the first signal resource includes:
determining a first position and a second position of the second signal resource based on the position of the first signal resource and an adjacent relationship of the multiple signal resources, in which the first position is the time domain position or the frequency domain position, and the second position is the time domain position or the frequency domain position different from the first position.

In some embodiments, determining the first position and the second position of the second signal resource based on the position of the first signal resource and the adjacent relationship of the multiple signal resources includes:
determining a first position of the first signal resource as the first position of the second signal resource;
determining an adjacent position to a second position of the first signal resource; and
determining the second position of the second signal resource based on the adjacent position and the adjacent relationship of the multiple signal resources.

In some embodiments, the second signal resource includes multiple CDM groups, and the first information also includes second indication information, the second indication information indicates a position of a first CDM group, the first CDM group is a CDM group(s) in the multiple CDM groups other than a second CDM group, and the second CDM group is any CDM group in the multiple CDM groups of the second signal resource; and determining the first position and the second position of the second signal resource based on the position of the first signal resource and the adjacent relationship of the multiple signal resources includes:
determining a first position of the first signal resource as a first position of the second CDM group of the second signal resource;
determining an adjacent position to a second position of the first signal resource;
determining a second position of the second CDM group based on the adjacent position and the adjacent relationship of the multiple signal resources; and
determining a first position and a second position of the first CDM group based on the second indication information.

In some embodiments, the second indication information includes a positional relationship of multiple CDM groups of the first signal resource; and determining the first position and the second position of the first CDM group based on the second indication information includes:
determining a positional relationship of multiple CDM groups in the first CDM group based on the positional relationship of the multiple CDM groups of the first signal resource; and
determining a first position and a second position of each CDM group in the first CDM group based on the positional relationship of the multiple CDM groups in the first CDM group.

In some embodiments, the first signal resource includes multiple CDM groups, and determining the first position and the second position of the second signal resource based on the position of the first signal resource and the adjacent relationship of the multiple signal resources includes:
determining a first position of a third CDM group of the first signal resource as the first position of the second signal resource, in which the third CDM group is any CDM group in the multiple CDM groups of the first signal resource;
determining an adjacent position to a second position of the third CDM group of the first signal resource; and
determining the second position of the second signal resource based on the adjacent position and the adjacent relationship of the multiple signal resources.

In some embodiments, the first information also includes third indication information, and the third indication information indicates the adjacent relationship of the multiple signal resources.

In some embodiments, the designated manner includes the CDM manner, and determining the position of the second signal resource in the designated manner based on the position of the first signal resource includes:
determining that the first signal resource and the second signal resource belong to the same resource set;
for each second signal resource, determining a third signal resource corresponding to the second signal resource from the first signal resource based on a designated association relationship, and determining a position of the third signal resource as the position of the second signal resource, in which the designated association relationship includes a correspondence between different second signal resources and different first signal resources.

In some embodiments, determining that the first signal resource and the second signal resource belong to the same resource set includes:
determining that resource information of the first signal resource is the same as resource information of the second signal resource, in which the resource information includes at least one of: a count of ports, a density, a start position of a resource block, a count of resource blocks, or a CDM group type, in which the same port index in different instances of resource information corresponds to the same subcarrier position or the same OFDM symbol position.

In some embodiments, the first information also includes fourth indication information, and the fourth indication information indicates the designated association relationship.

In some embodiments, determining the position of the second signal resource in the designated manner based on the position of the first signal resource includes:
determining a position of a fourth signal resource in a first manner based on the position of the first signal resource, in which the fourth signal resource is some of signal resources in the second signal resource, and the first manner is any manner in the designated manner; and
determining a position of a fifth signal resource in a second manner based on the position of the first signal resource and the position of the fourth signal resource, in which the fifth signal resource is a signal resource(s) in the second signal resource other than the fourth signal resource, and the second manner includes at least one manner in the designated manner other than the first manner.

In some embodiments, the signal resource is a CSI-RS resource.

In some embodiments, the multiple signal resources belong to at least one resource set, different resource sets have different instances of resource information, and the resource information includes at least one of: a count of ports, a density, a start position of a resource block, a count of resource blocks, or a CDM group type, and the same port index in different instances of resource information corresponds to the same subcarrier position or the same OFDM symbol position.

In some embodiments, the first signal resource is within one or more adjacent slots, or within one or more adjacent PRBs.

FIG. 4A is a flow chart illustrating a method for resource configuration according to an embodiment of the disclosure. As illustrated in FIG. 4A, embodiments of the disclosure relate to a method for resource configuration, and the method may be executed by a network device. The method may include the following.

At step S4101, first indication information and second indication information are sent.

For an alternative implementation of step S4101, please refer to the alternative implementation of block S2101 in FIG. 2A and other related parts in the embodiments involved in FIG. 2A, which is not repeated herein.

In some embodiments, the network device may send the first indication information and the second indication information to a terminal, but is not limited herein, and the network device may also send the first indication information and the second indication information to another entity.

FIG. 4B is a flow chart illustrating a method for resource configuration according to an embodiment of the disclosure. As illustrated in FIG. 4B, embodiments of the disclosure relate to a method for resource configuration, and the method may be executed by a network device. The method may include the following.

At step S4201, first indication information and third indication information are sent.

For an alternative implementation of step S4201, please refer to the alternative implementation of step S2101 in FIG. 2A and other related parts in the embodiments involved in FIG. 2A, which is not repeated herein.

In some embodiments, the network device may send the first indication information and the third indication information to a terminal, but is not limited herein, and the network device may also send the first indication information and the third indication information to another entity.

FIG. 4C is a flow chart illustrating a method for resource configuration according to an embodiment of the disclosure. As illustrated in FIG. 4C, embodiments of the disclosure relate to a method for resource configuration, and the method may be executed by a network device. The method may include the following.

At step S4301, first indication information and fourth indication information are sent.

For an alternative implementation of step S4301, please refer to the alternative implementation of step S2701 in FIG. 2A and other related parts in the embodiments involved in FIG. 2A, which is not repeated herein.

In some embodiments, the network device may send the first indication information and the fourth indication information to a terminal, but is not limited herein, and the network device may also send the first indication information and the fourth indication information to another entity.

FIG. 4D is a flow chart illustrating a method for resource configuration according to an embodiment of the disclosure. As illustrated in FIG. 4D, embodiments of the disclosure relate to a method for resource configuration, and the method may be executed by a network device. The method may include the following.

At step S4401, first information is sent.

For an alternative implementation of step S4401, please refer to the alternative implementation of step S2101 in FIG. 2A and other related parts in the embodiments involved in FIG. 2A, which is not repeated herein.

In some embodiments, the network device may send the first information to a terminal, but is not limited herein, and the network device may also send the first information to another entity.

In some embodiments, the second signal resource includes multiple CDM groups, and the first information also includes second indication information, the second indication information indicates a position of a first CDM group, the first CDM group is a CDM group(s) in the multiple CDM groups other than a second CDM group, and the second CDM group is any CDM group in the multiple CDM groups of the second signal resource; the second indication information is used for the terminal to determine a first position and a second position of the first CDM group, the first position is a time domain position or a frequency domain position, and the second position is the time domain position or the frequency domain position different from the first position.

In some embodiments, the second indication information includes a positional relationship of multiple CDM groups of the first signal resource; the second indication information is used for the terminal to determine a positional relationship of multiple CDM groups in the first CDM group based on the positional relationship of the multiple CDM groups of the first signal resource; and determine a first position and a second position of each CDM group in the first CDM group based on the positional relationship of the multiple CDM groups in the first CDM group.

In some embodiments, the position includes the time domain position and the frequency domain position, the first information also includes third indication information, and the third indication information indicates the adjacent relationship of the multiple signal resources;
the third indication information is used for the terminal to determine a first position and a second position of the second signal resource based on the position of the first signal resource and an adjacent relationship of the multiple signal resources, in which the first position is the time domain position or the frequency domain position, and the second position is the time domain position or the frequency domain position different from the first position.

In some embodiments, the first information also includes fourth indication information, and the fourth indication information indicates a designated association relationship; the designated association relationship includes a correspondence between different second signal resources and different first signal resources;
the fourth indication information is used for the terminal to determine that the first signal resource and the second signal resource belong to the same resource set; and for each second signal resource, determine a third signal resource corresponding to the second signal resource from the first signal resource based on a designated association relationship, and determine a position of the third signal resource as the position of the second signal resource.

In some embodiments, the signal resource is a CSI-RS resource.

In some embodiments, the multiple signal resources belong to one or more resource sets, different resource sets have different instances of resource information, and the resource information includes at least one of: a count of ports, a density, a start position of a resource block, a count of resource blocks, or a CDM group type, and the same port index in different instances of resource information corresponds to the same subcarrier position or the same OFDM symbol position.

In some embodiments, the first signal resource is within one or more adjacent slots, or within one or more adjacent PRBs.

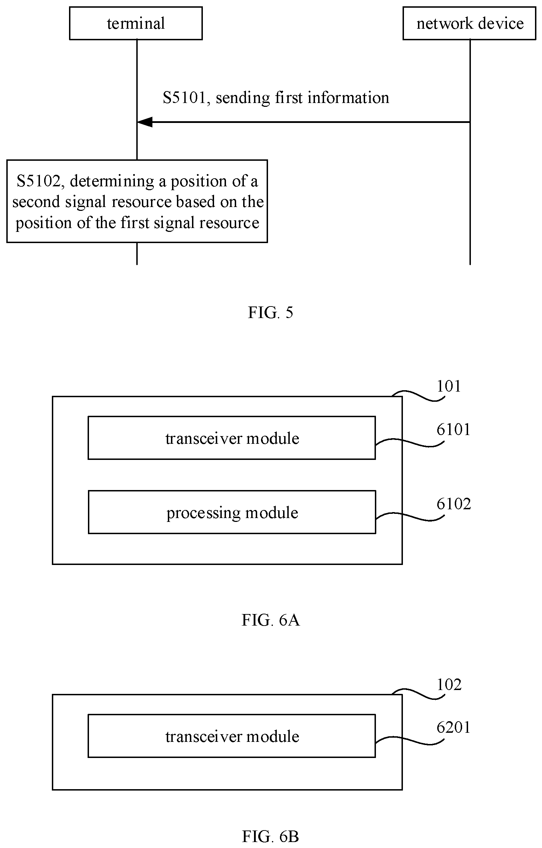

FIG. 5 is a flow chart illustrating an interaction of a method for resource configuration according to an embodiment of the disclosure. As illustrated in FIG. 5, embodiments of the disclosure relate to a method for resource configuration, and the method may be executed by a communication system. The method may include the following.

At step S5101, a network device sends first information to a terminal.

For an alternative implementation of step S5101, please refer to the alternative implementations of step S2101 in FIG. 2A, step S3101 in FIG. 3A, step S3201 in FIG. 3B, step S3301 in FIG. 3C, step S3401 in FIG. 3D, step S3501 in FIG. 3E, and other related parts in the embodiments involved in FIG. 2, FIG. 3A, FIG. 3B, FIG. 3C, FIG. 3D, and FIG. 3E, which is not repeated herein.

At step S5201, the terminal determines a position of a second signal resource based on the position of the first signal resource.

For an alternative implementation of step S5201, please refer to the alternative implementations of step S2102 in FIG. 2A, steps S2702 to S2703 in FIG. 2G, steps S2802 to S2803 in FIG. 2H, step S3102 in FIG. 3A, steps S3202 to S3203 in FIG. 3B, steps S3302 to S3303 in FIG. 3C, step S3402 in FIG. 3D, step S3502 in FIG. 3E, and other related parts in the embodiments involved in FIG. 2A, FIG. 2G, FIG. 2H, FIG. 3A, FIG. 3B, FIG. 3C, FIG. 3D, and FIG. 3E, which is not repeated herein.

The second signal resource is a signal resource(s) in the multiple signal resources other than the first signal resource, and the position of the second signal resource includes a position same as and/or adjacent to the position of the first signal resource.

In some embodiments, the above method may include the methods described in the embodiments of the above communication system, terminal, network device, and the like, which is not repeated herein.

In some embodiments, positions of N (N>1) CSI-RS resources in a time domain, a frequency domain, and/or a code domain are configured in an aggregation manner via a combination of FDM/TDM/CDM, to support channel measurement of larger antenna ports in a case that accuracy of channel measurement is ensured.

In some embodiments, N (N>1) CSI-RS resources with the same or different counts of ports are configured, and the N CSI-RS resources employ the same or different CDM groups. The N CSI-RS resources are from M (M≥1) CSI-RS resource sets. In a case that M=1, for the N CSI-RS resources from the M CSI-RS resource set, the N CSI-RS resources have the same count of ports, density, start position of a resource block (RB), count of RBs, and CDM group type. In a case that M>1, for the N CSI-RS resources from the M CSI-RS resource sets, the count of ports, densities, start positions of resource blocks, the count of RBs, and the CDM group types of the N CSI-RS resources may be different.

In some embodiments, the network device may send the N CSI-RS resources in an FDM/TDM/CDM manner.

In some embodiments, within one or more adjacent PRBs, one reference CSI-RS resource is defined, and N-1 CSI-RS resources and the reference CSI-RS resource are mapped to adjacent frequency domains.

In some embodiments, indicating a position where the CSI-RS resource is mapped to a resource element (RE) is: only indicating a time domain start position and a frequency domain start position of the reference CSI-RS resource; time domain start positions of the other N-1 CSI-RS resources are the same as the time domain start position of the reference CSI-RS resource; and frequency domain start positions of the N-1 CSI-RS resources are jointly determined based on the indicated frequency domain start position of the reference CSI-RS resource or a frequency domain start position where one CDM pattern in the reference CSI-RS resource is located, a CDM type, and an adjacent relationship between the N-1 CSI-RS resources and the reference CSI-RS resource.

In some embodiments, within one or more adjacent slots, one reference CSI-RS resource is defined, and N-1 CSI-RS resources and the reference CSI-RS resource are mapped to adjacent time domains.

In some embodiments, indicating the position where the CSI-RS resource is map to the RE is: only indicating the time domain start position and the frequency domain start position of the reference CSI-RS resource; frequency domain start positions of the other N-1 CSI-RS resources are the same as the frequency domain start position of the reference CSI-RS resource; and time domain start positions of the N-1 CSI-RS resources are jointly determined based on the indicated time domain start position of the reference CSI-RS resource or a time domain start position where one CDM pattern in the reference CSI-RS resource is located, the CDM type, and the adjacent relationship between the N-1 CSI-RS resources and the reference CSI-RS resource.

In some embodiments, the N resources are from one CSI-RS resource set, one reference CSI-RS resource is defined, and the N-1 CSI-RS resources and the reference CSI-RS resource are mapped to the same time-frequency domain position.

In some embodiments, indicating the position where the CSI-RS resource is mapped to the RE is: only indicating the time domain start position and the frequency domain start position of the reference CSI-RS resource, and the frequency domain start positions and the time domain start positions of the other N-1 CSI-RS resources are the same as the frequency domain start position and the time domain start position of the reference CSI-RS resource.

In some embodiments, the N CSI-RS resources are sent via a combination of any two or three manners of the FDM/TDM/CDM manner.

In an implementation, within one or more adjacent PRBs, or within one or more adjacent slots, one reference CSI-RS resource is defined, and with a time frequency domain mapping position and a frequency domain mapping position of the reference CSI-RS resource as a reference, the N CSI-RS resources are mapped in an order of t frequency domain first, followed by time domain.

In another implementation, within one or more adjacent PRBs, or within one or more adjacent slots, one reference CSI-RS resource is defined, and with the time domain mapping position and the frequency domain mapping position of the reference CSI-RS resource as a reference, the N CSI-RS resources are mapped in an order of time domain first, followed by frequency domain.

In some embodiments, indicating the position where the CSI-RS resource is mapped to an RE: indicating the time domain start position and the frequency domain start position of the reference CSI-RS resource, and the frequency domain start positions and the time domain start positions of the other N-1 CSI-RS resources are jointly determined based on the indicated time domain start position and the indicated frequency domain start position of the reference CSI-RS resource or the time domain start position and the frequency domain start position where one CDM pattern in the reference CSI-RS resource is located, the CDM types of the N-1 resources, and a mapping rule described in the above two implementations.

It should be noted that, for a configuration way of the FDM/TDM or a combination of the FDM and the TDM, in a case that the above reference CSI-RS resource includes multiple CDM groups, and the CDM groups are not adjacent in the time domain or the frequency domain, the other N-1 resources are adjacent to a time domain position and a frequency domain position where one predefined CDM group in the reference CSI-RS resource is located, in the frequency domain and/or the time domain. The predefined CDM group may be the first CDM group or the last CDM group.

### Embodiment 1 (FDM manner):

In a case that N=2 or 3, when N=2, the gNB configures one CSI-RS resource set for the UE, the resource set includes 2 CSI-RS resources, and the 2 CSI-RS resources have the same count of ports, CSI-RS resource density, CDM type, RB start position and bandwidth. In a case that CSI-RS resource IDs configured are 0 and 1 respectively, based on a size order of the resource IDs, a CSI-RS resource with ID=0 (signal resource 0) is defined as a first CSI-RS resource, a CSI-RS resource with ID=1 (signal resource 1) is defined as a second CSI-RS resource, and the CSI-RS resource with the minimum resource ID, i.e., ID=0, is defined as a reference resource.

As illustrated in FIG. 2C, time domain positions of the two CSI-RS resources are the same, and frequency domain positions of the two CSI-RS resources are adjacent. Thus, the gNB only configures a time domain start position and a frequency domain start position of the CSI-RS resource with ID=0, and a time domain start position and a frequency domain start position of the CSI-RS resource with ID=1 may be determined based on the time domain start position and the frequency domain start position of the CSI-RS resource with resource ID=0, without additional signaling indication. In a case that the CSI-RS resource with ID=0 is combined by multiple CDM patterns that are not adjacent in a frequency domain, the time domain start position and the frequency domain start position of the CSI-RS resource with ID=1 is determined based on a position where one CDM pattern is located, for example, the frequency domain position of the CSI-RS resource with ID=1 is determined based on a frequency domain position where a CDM pattern with a maximum index is located and a CDM type.

In a case that the gNB configures N (N=3) CSI-RS resources for the UE, IDs of the CSI-RS resources are configured as 0, 1 and 2 respectively, and are defined as indexes 1, 2, and 3 in an order of the ID values in an ascending order. The 3 resources are from two CSI-RS resource sets, in which the CSI-RS resource with ID=0 is from a CSI-RS resource set 1, and the two CSI-RS resources with ID=1 and ID=2 are from a CSI-RS resource set 2. When CDM patterns of the CSI-RS resources with ID=1 and ID=2 are configured, in case 1, the CDM pattern is the same as the CDM pattern of the CSI-RS resource with ID=0, and in case 2, a count of time domain REs in the CDM pattern of the CSI-RS resource ID=0 is twice a count of time domain REs in the CDM patterns of the CSI-RS resources ID=1 and ID=2. For case 1, a frequency domain position of the CSI-RS resource with the CSI-RS resource ID=1 (signal resource 1) is adjacent to a frequency domain position of the CSI-RS resource with ID=0 (signal resource 0), and a frequency domain position of the CSI-RS resource with ID=2 (signal resource 2) is adjacent to the frequency domain position of the CSI-RS resource with ID=1. For case 2, the frequency domain positions of the CSI-RS resource with ID=1 (signal resource 1) and the CSI-RS resource with ID=2 (signal resource 2) are adjacent to the frequency domain position of the CSI-RS resource with ID=0 (signal resource 0), as illustrated in FIG. 2D.

### Embodiment 2 (TDM manner):

Similar to the case of Embodiment 1, the gNB configures N (N=2 or 3) CSI-RS resources for the UE. When N=2, frequency domain positions of the two CSI-RS resources are the same, but time domain positions of the two CSI-RS resources are different. In a case that a CSI-RS resource with ID=0 serves as a reference CSI-RS resource, a time domain position and a frequency domain position of the CSI-RS resource with ID=0 are indicated by the gNB via an RRC signaling, and a time domain position of the CSI-RS resource with ID=1 is adjacent to the time domain position of the CSI-RS resource with ID=0, as illustrated in the left figure of FIG. 3. Alternatively, the time domain position of the CSI-RS resource with ID=1 may also be located at the left of and adjacent to the time domain position of the CSI-RS resource with ID=0. In a case that the CSI-RS resource with ID=0 includes multiple CDM patterns, the time domain position of the CSI-RS resource with ID=1 is adjacent to a time domain position where one CDM pattern in the CSI-RS resource with ID=0 is located, for example, the one CDM pattern is defined as a CDM pattern with a minimum index in the CDM patterns.

When N=3, similar to Embodiment 1, frequency domain positions of the 3 CSI-RS resources are the same, a time domain position of the CSI-RS resource with ID=1 is adjacent to a position of the reference CSI-RS resource with ID=0, and a time domain position of the CSI-RS resource with ID=2 is adjacent to the time domain position of the CSI-RS resource with ID=1, as illustrated in FIG. 2E. Alternatively, the time domain position of the CSI-RS resource with ID=2 (signal resource 2) is adjacent to the time domain position of the CSI-RS resource with ID=0 (signal resource 0), and is located at the left of the time domain position of the CSI-RS resource with ID=0 (signal resource 0).

In a case that the multiple CDM patterns of the CSI-RS resource with ID=0 are not adjacent in a time domain, positions of the CSI-RS resources with ID=1 and ID=2 may be determined based on a time domain position of one CDM pattern of the CSI-RS resource with ID=0, for example, adjacent to a time domain position of a CDM pattern with a maximum index. Alternatively, the positions of the CSI-RS resources with ID=1 and ID=2 may be determined based on time domain positions of the multiple CDM patterns of the CSI-RS resource with ID=0. For example, the time domain position of the CSI-RS resource with ID=1 is adjacent to the time domain position of the CDM pattern with the maximum index in the CSI-RS resource with ID=0, and the time domain position of the CSI-RS resource with ID=2 is adjacent to the time domain position of the CDM pattern with the minimum index in the CSI-RS resource with ID=0.

### Embodiment 3 (a combination of the FDM manner and the TDM manner):

In a case that the gNB configures N (N=4) CSI-RS resources for the UE, the resource IDs are configured as 0, 1, 2 and 3, and the 4 CSI-RS resources are ordered in an order of the IDs in an ascending order, the 4 resources are from one CSI-RS resource set, and have the same CDM pattern, frequency domain density, RB start position, count of CSI-RS ports and bandwidth. For a configuration manner of the 4 CSI-RS resources, two CSI-RS resources may be configured first in a time domain, e.g., the CSI-RS resource with ID=0 (signal resource 0) and the CSI-RS resource with ID=1 (signal resource 1) are configured, and then with time domain positions of the CSI-RS resource with ID=0 (signal resource 0) and the CSI-RS resource with ID=1 (signal resource 1) as a reference, the CSI-RS resource with ID=2 (signal resource 2) and the CSI-RS resource with ID=3 (signal resource 3) are configured at frequency domain positions adjacent to frequency domain positions of the CSI-RS resource with ID=0 (signal resource 0) and the CSI-RS resource with ID=1 (signal resource 1), as illustrated in FIG. 2I.

The CSI-RS resource with ID=0 is defined as a reference CSI-RS resource. According to the above predefined rule, the gNB only needs to indicate a time domain position and a frequency domain position of the CSI-RS resource with ID=0, and time domain positions and frequency domain positions of the other 3 CSI-RS resources are determined based on the predefined rule.

In some embodiments of the disclosure, a communication system is provided. The communication system may include a terminal and a network device. The terminal is configured to execute the method for resource configuration executed by the terminal according to any one of the above embodiments of the disclosure; and the network device is configured to execute the method for resource configuration executed by the network device according to any one of the above embodiments of the disclosure.

Embodiments of the disclosure also provide an apparatus for implementing any one of the above methods. For example, an apparatus is provided, including units or modules for executing the steps executed by the terminal in any one of the above methods. For another example, another apparatus is provided, including units or modules for executing the steps executed by the first network device (such as, an access network device, a core network node, a core network device, etc.) in any one of the above methods.

It should be understood that a division of units or modules in the above apparatus is only a division of logical functions. In actual implementations, the units or modules may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Alternatively, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large count of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 6A is a block diagram illustrating a terminal according to an embodiment of the disclosure. As illustrated in FIG. 6A, the terminal 101 may include at least one of a transceiver module 6101, a processing module 6102, and the like. In some embodiments, the transceiver module 6101 is configured to receive first information sent from a network device, in which the first information includes first indication information, the first indication information indicates a position of a first signal resource, the first signal resource is at least one signal resource in multiple signal resources, and different signal resources are used to measure channels corresponding to different antenna ports; and the processing module 6102 is configured to determine a position of a second signal resource based on the position of the first signal resource, in which the second signal resource is a signal resource(s) in the multiple signal resources other than the first signal resource, and the position of the second signal resource includes a position same as and/or adjacent to the position of the first signal resource. Alternatively, the transceiver module 6101 may be configured to execute at least one of the communication steps (e.g., step S2101, step S2701, but is not limited herein) such as sending and/or receiving executed by the terminal 101 in any of the above methods, which is not repeated herein. Alternatively, the processing module 6102 may be configured to execute at least one of the other steps (e.g., step S2102, step S2702, step S2703, but is not limited herein) executed by the terminal 101 in any of the above methods, which is not repeated herein.

In some embodiments, the transceiver module may include a sending module and/or a receiving module. The sending module and the receiving module may be separate or may be integrated. Alternatively, the transceiver module may be interchangeable with a transceiver.

FIG. 6B is a block diagram illustrating a network device according to an embodiment of the disclosure. As illustrated in FIG. 6B, the network device 102 may include at least one of a transceiver module 6201, a processing module 6202, and the like. In some embodiments, the transceiver module 6201 is configured to send first information to a terminal, in which the first information includes first indication information, the first indication information indicates a position of a first signal resource, the first signal resource is at least one signal resource in multiple signal resources, and different signal resources are used to measure channels corresponding to different antenna ports; the first indication information is used for the terminal to determine a position of a second signal resource based on the position of the first signal resource, in which the second signal resource is a signal resource(s) in the multiple signal resources other than the first signal resource, and the position of the second signal resource includes a position same as and/or adjacent to the position of the first signal resource. Alternatively, the transceiver module 6201 may be configured to execute at least one of the communication steps (e.g., step S4101, but is not limited herein) such as sending and/or receiving executed by the network device 102 in any of the above methods, which is not repeated herein.

In some embodiments, the transceiver module may include a sending module and/or a receiving module. The sending module and the receiving module may be separate or may be integrated. Alternatively, the transceiver module may be interchangeable with a transceiver.

In some embodiments, the processing module may be a single module, or may include multiple sub-modules. Alternatively, the multiple sub-modules perform all or some of the steps required to be performed by the processing module. Alternatively, the processing module may be interchangeable with a processor.

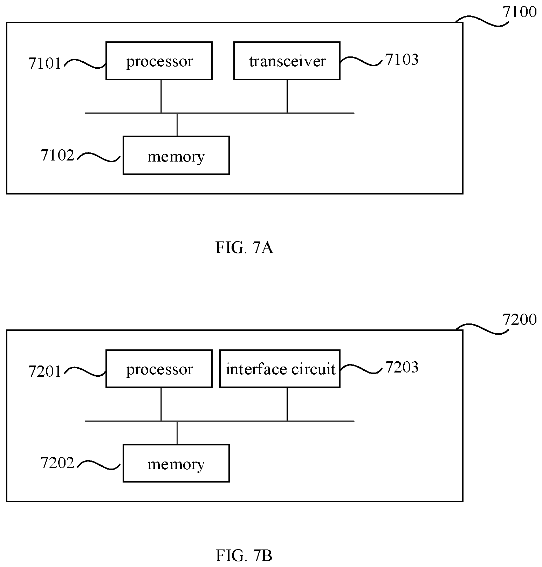

FIG. 7A is a block diagram illustrating a communication device 7100 according to an embodiment of the disclosure. The communication device 7100 may be a network device (such as an access network device, a core network device, etc.), or a terminal (such as a UE, etc.), or a chip, a chip system, a processor, etc. that supports a first device to implement any one of the methods, or a chip, a chip system, a processor, etc. that supports the terminal to implement any one of the methods. The communication device 7100 may be configured to implement the method in the above method embodiments. For details, please refer to the description in the above method embodiments.

As illustrated in FIG. 7A, the communication device 7100 may include one or more processors 7101. The processor 7101 may be a general purpose processor or a special purpose processor, such as, a baseband processor or a central processing unit. The baseband processor may be configured to process communication protocols and communication data, and the central processing unit may be configured to control communication apparatuses (such as a base station, a baseband chip, an IoT device, an IoT device chip, a DU or a CU, etc.), to execute programs, and to process program data. The communication device 7100 is configured to execute any one of the above methods.

Alternatively, the communication device 7100 also includes one or more memories 7102 for storing instructions. Alternatively, all or some of the memories 7102 may also be located outside the communication device 7100.

In some embodiments, the communication device 7100 also includes one or more transceivers 7103. When the communication device 7100 includes one or more transceivers 7103, the transceiver 7103 execute at least one of the communication steps (e.g., step S2101, step S4101, but is not limited herein) such as sending and/or receiving in the above method, and the processor 7101 performs at least one of other steps (e.g., step S2102, but is not limited herein).

In some embodiments, the transceiver may include a receiver and a transmitter, which may be separate or integrated together. Alternatively, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

In some embodiments, the communication device 7100 also includes one or more interface circuits. Alternatively, the interface circuit is connected to the memory 7102. The interface circuit may be configured to receive signals from the memory 7102 or other devices, and may be configured to send signals to the memory 7102 or other devices. For example, the interface circuit may read instructions stored in the memory 7102 and send the instructions to the processor 7101.

The communication device 7100 in the above embodiments may be a first device or an IoT device, but a scope of the communication device 7100 in the disclosure is not limited to this, and a structure of the communication device 7100 may not be limited by FIG. 7A. The communication device may be an independent device or a part of a larger device. For example, the communication device may be: 1) an independent IC, or a chip, or a chip system or a subsystem; 2) a collection including one or more IC, alternatively, the IC collection also including storage components for storing data and computer programs; 3) an ASIC, such as a modem; 4) modules embedded in other devices; 5) a receiver, an IoT device, an intelligent IoT device, a cellular phone, a wireless device, a handheld phone, a mobile unit, a vehicle-mounted device, a network device, a cloud device, an artificial intelligence device, etc.; 6) others.

FIG. 7B is a block diagram illustrating a chip 7200 according to an embodiment of the disclosure. For a case where the communication device 7100 may be a chip or a chip system, please refer to the block diagram of the chip 7200 illustrated in FIG. 7B, but not limited to this.

The chip 7200 includes one or more processors 7201. The chip 7200 is configured to execute any one of the above methods.

In some embodiments, the chip 7200 also includes one or more interface circuits 7203. Alternatively, the interface circuit 7203 is connected to a memory 7202. The interface circuit 7203 may be configured to receive signals from the memory 7202 or other devices, and may be configured to send signals to the memory 7202 or other devices. For example, the interface circuit 7203 may read the instructions stored in the memory 7203 and send the instructions to the processor 7201.

In some embodiments, the interface circuit 7203 executes at least one of the communication steps such as sending and/or receiving in the above method (e.g., step S2101, step S4101, but is not limited herein), and the processor 7201 performs at least one of other steps (e.g., step S2102, but is not limited herein).

In some embodiments, terms such as interface circuit, interface, transceiver pin, transceiver, etc. may be used interchangeably.

In some embodiments, the chip 7200 also includes one or more memories 7202 for storing instructions. Alternatively, all or some of the memories 7202 may be located outside the chip 7200.

The disclosure also provides a storage medium for storing instructions. When the instructions are run on the communication device 7100, the communication device 7100 is caused to execute any one of the above methods. Alternatively, the above storage medium is an electronic storage medium. Alternatively, the above storage medium is a computer-readable storage medium, which is not limited to this, and the above storage medium may also be a storage medium readable by other devices. Alternatively, the above storage medium may be a non-transitory storage medium, which is not limited to this, and the above storage medium may also be a transitory storage medium.

The disclosure also provides a program product. When the program product is executed by the communication device 7100, the communication device 7100 is caused to execute any one of the above methods. Alternatively, the above program product is a computer program product.

The disclosure also provides a computer program. When the computer program is run on a computer, the computer is caused to execute any one of the above methods.

## Claims

1. A method for resource configuration, comprising:
receiving first information sent from a network device, wherein the first information comprises first indication information, the first indication information indicates a position of a first signal resource, the first signal resource is at least one signal resource in a plurality of signal resources, and different signal resources are used to measure channels corresponding to different antenna ports; and
determining a position of a second signal resource based on the position of the first signal resource, wherein the second signal resource is a signal resource(s) in the plurality of signal resources other than the first signal resource, and the position of the second signal resource comprises a position same as and/or adjacent to the position of the first signal resource.

2. The method of claim 1, wherein determining the position of the second signal resource based on the position of the first signal resource comprises:
determining the position of the second signal resource in a designated manner based on the position of the first signal resource,
wherein the designated manner comprises at least one of: a time domain multiplexing (TDM) manner, a frequency domain multiplexing (FDM) manner, or a code domain multiplexing (CDM) manner.

3. The method of claim 2, wherein the position comprises a time domain position and a frequency domain position, and the designated manner comprises the TDM manner or the FDM manner; and determining the position of the second signal resource in the designated manner based on the position of the first signal resource comprises:
determining a first position and a second position of the second signal resource based on the position of the first signal resource and an adjacent relationship of the plurality of signal resources, wherein the first position is the time domain position or the frequency domain position, and the second position is the time domain position or the frequency domain position different from the first position.

4. The method of claim 3, wherein determining the first position and the second position of the second signal resource based on the position of the first signal resource and the adjacent relationship of the plurality of signal resources comprises:
determining a first position of the first signal resource as the first position of the second signal resource;
determining an adjacent position to a second position of the first signal resource; and
determining the second position of the second signal resource based on the adjacent position and the adjacent relationship of the plurality of signal resources.

5. The method of claim 3, wherein the second signal resource comprises a plurality of CDM groups, and the first information comprises second indication information, the second indication information indicates a position of a first CDM group, the first CDM group is a CDM group(s) in the plurality of CDM groups other than a second CDM group, and the second CDM group is any CDM group in the plurality of CDM groups of the second signal resource; and determining the first position and the second position of the second signal resource based on the position of the first signal resource and the adjacent relationship of the plurality of signal resources comprises:
determining a first position of the first signal resource as a first position of the second CDM group of the second signal resource;
determining an adjacent position to a second position of the first signal resource;
determining a second position of the second CDM group based on the adjacent position and the adjacent relationship of the plurality of signal resources; and
determining a first position and a second position of the first CDM group based on the second indication information.

6. The method of claim 5, wherein the second indication information comprises a positional relationship of a plurality of CDM groups of the first signal resource; and determining the first position and the second position of the first CDM group based on the second indication information comprises:
determining a positional relationship of a plurality of CDM groups in the first CDM group based on the positional relationship of the plurality of CDM groups of the first signal resource; and
determining a first position and a second position of each CDM group in the first CDM group based on the positional relationship of the plurality of CDM groups in the first CDM group.

7. The method of claim 3, wherein the first signal resource comprises a plurality of CDM groups, and determining the first position and the second position of the second signal resource based on the position of the first signal resource and the adjacent relationship of the plurality of signal resources comprises:
determining a first position of a third CDM group of the first signal resource as the first position of the second signal resource, wherein the third CDM group is any CDM group in the plurality of CDM groups of the first signal resource;
determining an adjacent position to a second position of the third CDM group of the first signal resource; and
determining the second position of the second signal resource based on the adjacent position and the adjacent relationship of the plurality of signal resources.

8. The method of any one of claims 3 to 7, wherein the first information comprises third indication information, and the third indication information indicates the adjacent relationship of the plurality of signal resources.

9. The method of claim 2, wherein the designated manner comprises the CDM manner, and determining the position of the second signal resource in the designated manner based on the position of the first signal resource comprises:
determining that the first signal resource and the second signal resource belong to the same resource set; and
for each second signal resource, determining a third signal resource corresponding to the second signal resource from the first signal resource based on a designated association relationship, and determining a position of the third signal resource as the position of the second signal resource, wherein the designated association relationship comprises a correspondence between different second signal resources and different first signal resources.

10. The method of claim 9, wherein determining that the first signal resource and the second signal resource belong to the same resource set comprises:
determining that resource information of the first signal resource is the same as resource information of the second signal resource, wherein the resource information comprises at least one of: a count of ports, a density, a start position of a resource block, a count of resource blocks, or a CDM group type, and the same port index in different instances of resource information corresponds to the same subcarrier position or the same orthogonal frequency division multiplexing (OFDM) symbol position.

11. The method of claim 9 or 10, wherein the first information comprises fourth indication information, and the fourth indication information indicates the designated association relationship.

12. The method of claim 2, wherein determining the position of the second signal resource in the designated manner based on the position of the first signal resource comprises:
determining a position of a fourth signal resource in a first manner based on the position of the first signal resource, wherein the fourth signal resource is some of signal resources in the second signal resource, and the first manner is any manner in the designated manner; and
determining a position of a fifth signal resource in a second manner based on the position of the first signal resource and the position of the fourth signal resource, wherein the fifth signal resource is a signal resource(s) in the second signal resource other than the fourth signal resource, and the second manner comprises at least one manner in the designated manner other than the first manner.

13. The method of any one of claims 1 to 12, wherein the signal resource is a channel status information-reference signal (CSI-RS) resource.

14. The method of any one of claims 1 to 13, wherein the plurality of signal resources belong to one or more resource sets, different resource sets have different instances of resource information, and the resource information comprises at least one of: a count of ports, a density, a start position of a resource block, a count of resource blocks, or a CDM group type, and the same port index in different instances of resource information corresponds to the same subcarrier position or the same OFDM symbol position.

15. The method of any one of claims 1 to 14, wherein the first signal resource is within one or more adjacent slots, or within one or more adjacent physical resource blocks (PRBs).

16. A method for resource configuration, comprising:
sending first information to a terminal, wherein the first information comprises first indication information, the first indication information indicates a position of a first signal resource, the first signal resource is at least one signal resource in a plurality of signal resources, and different signal resources are used to measure channels corresponding to different antenna ports; the first indication information is used for the terminal to determine a position of a second signal resource based on the position of the first signal resource, wherein the second signal resource is a signal resource(s) in the plurality of signal resources other than the first signal resource, and the position of the second signal resource comprises a position same as and/or adjacent to the position of the first signal resource.

17. The method of claim 16, wherein the second signal resource comprises a plurality of code domain multiplexing (CDM) groups, and the first information comprises second indication information, the second indication information indicates a position of a first CDM group, the first CDM group is a CDM group(s) in the plurality of CDM groups other than a second CDM group, and the second CDM group is any CDM group in the plurality of CDM groups of the second signal resource; the second indication information is used for the terminal to determine a first position and a second position of the first CDM group, the first position is a time domain position or a frequency domain position, and the second position is the time domain position or the frequency domain position different from the first position.

18. The method of claim 17, wherein the second indication information comprises a positional relationship of a plurality of CDM groups of the first signal resource; the second indication information is used for the terminal to determine a positional relationship of a plurality of CDM groups in the first CDM group based on the positional relationship of the plurality of CDM groups of the first signal resource; and determine a first position and a second position of each CDM group in the first CDM group based on the positional relationship of the plurality of CDM groups in the first CDM group.

19. The method of claim 16, wherein the position comprises a time domain position and a frequency domain position, the first information comprises third indication information, and the third indication information indicates an adjacent relationship of the plurality of signal resources; and
the third indication information is used for the terminal to determine a first position and a second position of the second signal resource based on the position of the first signal resource and the adjacent relationship of the plurality of signal resources, wherein the first position is the time domain position or the frequency domain position, and the second position is the time domain position or the frequency domain position different from the first position.

20. The method of claim 16, wherein the first information comprises fourth indication information, and the fourth indication information indicates a designated association relationship; the designated association relationship comprises a correspondence between different second signal resources and different first signal resources; and
the fourth indication information is used for the terminal to determine that the first signal resource and the second signal resource belong to the same resource set; and for each second signal resource, determine a third signal resource corresponding to the second signal resource from the first signal resource based on a designated association relationship, and determine a position of the third signal resource as the position of the second signal resource.

21. The method of any one of claims 16 to 20, wherein the signal resource is a channel status information-reference signal (CSI-RS) resource.

22. The method of any one of claims 16 to 21, wherein the plurality of signal resources belong to one or more resource sets, different resource sets have different instances of resource information, and the resource information comprises at least one of: a count of ports, a density, a start position of a resource block, a count of resource blocks, or a CDM group type, and the same port index in different instances of resource information corresponds to the same subcarrier position or the same orthogonal frequency division multiplexing (OFDM) symbol position.

23. The method of any one of claims 16 to 22, wherein the first signal resource is within one or more adjacent slots, or within one or more adjacent physical resource blocks (PRBs).

24. A terminal, comprising:
a transceiver module, configured to receive first information sent from a network device, wherein the first information comprises first indication information, the first indication information indicates a position of a first signal resource, the first signal resource is at least one signal resource in a plurality of signal resources, and different signal resources are used to measure channels corresponding to different antenna ports; and
a processing module, configured to determine a position of a second signal resource based on the position of the first signal resource, wherein the second signal resource is a signal resource(s) in the plurality of signal resources other than the first signal resource, and the position of the second signal resource comprises a position same as and/or adjacent to the position of the first signal resource.

25. A network device, comprising:
a transceiver module, configured to send first information to a terminal, wherein the first information comprises first indication information, the first indication information indicates a position of a first signal resource, the first signal resource is at least one signal resource in a plurality of signal resources, and different signal resources are used to measure channels corresponding to different antenna ports; the first indication information is used for the terminal to determine a position of a second signal resource based on the position of the first signal resource, wherein the second signal resource is a signal resource(s) in the plurality of signal resources other than the first signal resource, and the position of the second signal resource comprises a position same as and/or adjacent to the position of the first signal resource.

26. A communication device, comprising:
one or more processors;
wherein the one or more processors are configured to execute the method of any one of claims 1 to 15, or to execute the method of any one of claims 16 to 23.

27. A storage medium storing instructions, wherein when the instructions are run on a communication device, the communication device is caused to execute the method of any one of claims 1 to 15, or to implement the method of any one of claims 16 to 23.
